(19) Europäisches Patentamt / European Patent Office / Office européen des brevets

(11) **EP 4 451 774 A1**

(12) **EUROPEAN PATENT APPLICATION**
published in accordance with Art. 153(4) EPC

(43) Date of publication:
**23.10.2024 Bulletin 2024/43**

(21) Application number: **23746425.0**

(22) Date of filing: **29.01.2023**

(51) International Patent Classification (IPC):
**H04W 72/04** (2023.01)

(52) Cooperative Patent Classification (CPC):
**H04L 5/00; H04W 72/04; H04W 72/0453**

(86) International application number:
**PCT/CN2023/073651**

(87) International publication number:
**WO 2023/143548 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.01.2022 CN 202210114704**

(71) Applicant: **Huawei Technologies Co., Ltd.
Shenzhen, Guangdong 518129 (CN)**

(72) Inventors:
• LUO, Zhihu
  **Shenzhen, Guangdong 518129 (CN)**
• WU, Yiling
  **Shenzhen, Guangdong 518129 (CN)**
• LIU, Liehai
  **Shenzhen, Guangdong 518129 (CN)**
• JIN, Zhe
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS, DEVICE AND STORAGE MEDIUM**

(57) This application provides a communication method, apparatus, and device, and a storage medium. The method includes: A first device determines a first frequency unit, and the first device communicates with a second device on the first frequency unit. A granularity of a first channel raster corresponding to the first frequency unit is less than or equal to a granularity of a second channel raster corresponding to a second frequency unit. The second frequency unit is used for communication between the first device and a third device. The first frequency unit and the second frequency domain unit are located in a same operating band. Embodiments of this application provide a solution for determining the frequency unit, so that the first device can communicate with the second device via the first frequency unit. In addition, when the frequency unit is determined, the granularity of the channel raster is considered, and the granularity of the first channel raster corresponding to the first frequency unit is set to a smaller value, to improve flexibility of deploying the first frequency unit.

400

First device | Second device

S410-1: Determine a first frequency unit

S410-2: Determine the first frequency unit

S420-1: Send a downlink signal on the first frequency unit

S420-2: Send an uplink signal on the first frequency unit

FIG. 8

**Description**

This application claims priority to Chinese Patent Application No. 202210114704.6, filed with the China National Intellectual Property Administration on January 30, 2022 and entitled "COMMUNICATION METHOD, APPARATUS, AND DEVICE, AND STORAGE MEDIUM", which is incorporated herein by reference in its entirety.

**TECHNICAL FIELD**

This application relates to the field of communication technologies, and in particular, to a communication method, apparatus, and device, and a storage medium.

**BACKGROUND**

With wide application of machine-type communication (machine-type communication, MTC) and internet of things (internet of things, IoT) communication, in some communication systems such as a long term evolution (Long Term Evolution, LTE) system and a new radio (New Radio, NR) system, technologies like radio frequency identification (radio frequency identification, RFID) and wake-up receiver or wake-up radio (wake-up receiver or wake-up radio, WUR) are supported, to reduce application costs and power consumption of IoT. To meet this requirement, how to apply the RFID and WUR technologies to communication systems is a problem to be urgently resolved currently. No matter which technology is used, for inter-device communication, a frequency unit used for the communication needs to be first determined.

**SUMMARY**

Embodiments of this application provide a communication method, apparatus, and device, and a storage medium, to provide a solution for determining a frequency unit for inter-device communication.

According to a first aspect, an embodiment of this application provides a communication method. The method includes: A first device determines a first frequency unit. The first device communicates with a second device on the first frequency unit. A granularity of a first channel raster corresponding to the first frequency unit is less than or equal to a granularity of a second channel raster corresponding to a second frequency unit. The second frequency unit is used for communication between the first device and a third device. The first frequency unit and the second frequency domain unit are located in a same operating band.

In the communication method provided in the first aspect, when communicating with different devices, the first device determines the first frequency unit used for the communication between the first device and the second device. The first frequency unit and the second frequency unit that is used for communication between the first device and the third device are located in the same operating band, and the granularity of the first channel raster corresponding to the first frequency unit is less than or equal to the granularity of the second channel raster Embodiments of this application provide a solution for determining the frequency unit, so that the first device can communicate with the second device via the first frequency unit. In addition, when the frequency unit is determined, the granularity of the channel raster is considered, and the granularity of the first channel raster corresponding to the first frequency unit may be set to a smaller value, to improve flexibility of deploying the first frequency unit.

The first device may communicate with another device by sending a signal or receiving a signal.

In a possible implementation, a frequency position at which the first channel raster in the first frequency unit is located corresponds to a frequency position of a resource element in the first frequency unit, and an index of the resource element in frequency domain is determined based on a transmission bandwidth of the first frequency unit or a transmission bandwidth of the second frequency unit.

In the communication method provided in this implementation, the first device determines the frequency position of the resource element corresponding to the first channel raster.

In a possible implementation, a boundary of a resource block of the first frequency unit is aligned with a boundary of a resource block of the second frequency unit, or a boundary of a subcarrier of the first frequency unit is aligned with a boundary of a subcarrier of the second frequency unit.

In the communication method provided in this implementation, the boundary of the RB of the first frequency unit needs to be aligned with the boundary of the RB of the second frequency unit, to avoid causing a resource fragment and reducing spectrum usage efficiency. The boundary of the subcarrier of the first frequency unit may be aligned with the boundary of the subcarrier of the second frequency unit, to avoid interference caused to data transmission within the transmission bandwidth of the second frequency unit because the subcarriers are non-orthogonal.

In a possible implementation, when the first frequency unit is included in the transmission bandwidth of the second frequency unit, the boundary of the resource block of the first frequency unit is aligned with the boundary of the resource block of the second frequency unit. Alternatively, when the first frequency unit is included in a guard band of the second frequency unit, the boundary of the subcarrier of the first frequency unit is aligned with the boundary of the subcarrier of the second frequency unit. Alternatively, when the first frequency unit is not included in the second frequency unit, and a frequency domain spacing between the first frequency unit and the second frequency unit is less than a threshold, the boundary of the subcarrier of the first frequency unit is aligned with the boundary of the subcarrier of the second frequency unit.

In the communication method provided in this implementation, when the first frequency unit is included in the transmission bandwidth of the second frequency unit, the boundary of the RB of the first frequency unit needs to be aligned with the boundary of the RB of the second frequency unit, to avoid causing a resource fragment and reducing spectrum usage efficiency. When the first frequency unit is not included in the transmission bandwidth of the second frequency unit, the boundary of the subcarrier of the first frequency unit may be aligned with the boundary of the subcarrier of the second frequency unit, to avoid interference caused to data transmission within the transmission bandwidth of the second frequency unit because the subcarriers are non-orthogonal.

In a possible implementation, the granularity of the first channel raster is determined based on at least one of the following: a deployment mode of the first frequency unit; and a subcarrier spacing of the first frequency unit.

In the communication method provided in this implementation, the granularity of the first channel raster is determined based on the deployment mode of the first frequency unit and/or the subcarrier spacing of the first frequency unit, so that the granularity of the first channel raster is applicable to current communication. For example, when flexibility of deploying the first frequency unit is met, the granularity of the first channel raster does not need to be set to an excessively small value.

In a possible implementation, in a same operating band, the granularity of the second channel raster is 100 kHz, and the granularity of the first channel raster is an integer multiple of 5 kHz, 10 kHz, or 20 kHz.

In the communication method provided in this implementation, flexibility of deploying the first frequency unit can be improved.

In a possible implementation, a radio frequency reference frequency $F_{REF}$ corresponding to the first frequency unit satisfies: $F_{REF}=F_{REF-Offs}+\Delta F_{Global} (N_{REF}-N_{REF-Offs})+offset$. $F_{REF-Offs}$ is a radio frequency reference frequency offset value, $\Delta F_{Global}$ is a granularity of a global channel raster, $N_{REF}$ is a new radio absolute radio frequency channel number NR-ARFCN, $N_{REF-Offs}$ is an NR-ARFCN offset value, offset is a frequency offset, and a value of offset is one of {-50, -45, -40, -35, -30, -25, -20, -15, -10, -5, 0, 5, 10, 15, 20, 25, 30, 35, 40, 45, 50} kHz.

In the communication method provided in this implementation, the radio frequency reference frequency is determined based on offset with the foregoing value, to determine the granularity of the first channel raster with a small value, to improve flexibility of deploying the first frequency unit.

In a possible implementation, the first frequency unit includes an uplink frequency unit used for transmitting an uplink signal, and/or a downlink frequency unit used for transmitting a downlink signal. That a first device determines a first frequency unit includes: The first device determines the uplink frequency unit based on an uplink frequency position and an uplink offset; and/or the first device determines the downlink frequency domain unit based on a downlink frequency position and a downlink offset. Before that a first device determines a first frequency unit, the method includes: The first device determines the uplink offset and/or the downlink offset based on at least one of a type of a frequency band in which the downlink frequency unit is located, a first capability of the second device, a type of the second device, a type of a time domain resource on which a signal carried by the downlink frequency unit is located, and a type of a time domain resource on which a signal carried by the uplink frequency unit is located. The first capability indicates whether a frequency shift of the uplink signal to an uplink transmission frequency band other than a downlink transmission frequency band in which the downlink frequency unit is located is supported.

In the communication method provided in this implementation, the first device determines the first frequency unit based on the uplink offset and/or the downlink offset, to avoid mutual interference caused to data transmission between communication systems because the boundary of the subcarrier of the first frequency unit is not aligned with a boundary of a subcarrier of another communication system (for example, an LTE system) (that is, the subcarriers are not orthogonal).

In a possible implementation, the downlink frequency unit is located in the downlink transmission frequency band, and when the first capability indicates that the frequency shift of the uplink signal to the uplink transmission frequency band other than the downlink transmission frequency band is supported, the uplink offset is a first value or a second value. Alternatively, when the first capability indicates that the frequency shift of the uplink signal to the uplink transmission frequency band other than the downlink transmission frequency band is not supported, the uplink offset is a first value. Alternatively, the downlink frequency unit is located in the uplink transmission frequency band, and both the downlink offset and the uplink offset are a first value or a second value.

In the communication method provided in this implementation, when the second device supports the shift of the uplink signal to the uplink transmission frequency band, the subcarrier and an uplink carrier of the another communication system (for example, the LTE system) may be located in a same transmission frequency band. In this case, it needs to be determined that the uplink offset is the second value (that is, the first frequency unit needs to be shifted) or the first value (that is, the first frequency unit does not need to be shifted), to avoid that the boundary of the subcarrier of the first frequency unit is not aligned with the boundary of the subcarrier of the another communication system.

In a possible implementation, the downlink transmission frequency band and the uplink transmission frequency band are located in a same operating band.

The communication method provided in this implementation is more suitable for determining of the uplink offset and/or the downlink offset in an FDD mode.

In a possible implementation, the downlink transmission frequency band and the uplink transmission frequency band are located in different operating bands.

In the communication method provided in this implementation, in a scenario in which the downlink transmission frequency band and the uplink transmission frequency band are not transmission frequency bands in pairs in the FDD mode, the uplink offset and/or the downlink offset are/is determined.

In a possible implementation, when the uplink transmission frequency band is used for LTE uplink communication, the uplink offset is the second value. Alternatively, when the uplink transmission frequency band is not used for LTE uplink communication, the uplink offset is the first value.

In the communication method provided in this implementation, when the uplink transmission frequency band is used for the LTE uplink communication, the first frequency unit needs to be shifted to implement alignment between the boundary of the subcarrier and a boundary of a subcarrier of a frequency unit of the LTE system. When the uplink transmission frequency band is not used for the LTE uplink communication, a problem of the alignment between the boundary of the subcarrier of the first frequency unit and the boundary of the subcarrier of the frequency unit of the LTE system does not exist, and the shift does not need to be performed.

In a possible implementation, the first frequency unit is located in a TDD operating band, and when the downlink signal occupies a downlink time domain resource, and the uplink signal occupies an uplink time domain resource, both the downlink offset and the uplink offset are a first value or a second value. Alternatively, when both the downlink signal and the uplink signal occupy a downlink time domain resource, both the downlink offset and the uplink offset are a first value. Alternatively, when both the downlink signal and the uplink signal occupy an uplink time domain resource, both the downlink offset and the uplink offset are a first value or a second value.

In the communication method provided in this implementation, when both the uplink signal carried by the uplink frequency unit and an uplink signal of the another communication system (for example, the LTE system) may be transmitted on the uplink time domain resource, whether a frequency shift needs to be performed on the first frequency unit based on the uplink/downlink offset needs to be further determined, to avoid that the boundary of the subcarrier of the first frequency unit is not aligned with the boundary of the subcarrier of the frequency unit of the another communication system.

In a possible implementation, when the uplink time domain resource is used for LTE uplink communication, the downlink offset and the uplink offset are the second value. Alternatively, when the uplink time domain resource is not used for LTE uplink communication, the downlink offset and the uplink offset are the first value.

In the communication method provided in this implementation, when it is determined that the uplink time domain resource is used for the LTE uplink communication, it is determined that the frequency shift needs to be performed on the first frequency unit based on the uplink/downlink offset, to avoid that the boundary of the subcarrier of the first frequency unit is not aligned with a boundary of a subcarrier of a frequency unit of LTE. Otherwise, the frequency shift does not need to be performed.

In a possible implementation, the first value is 0, and the second value is 7.5 kHz.

In the communication method provided in this implementation, if the uplink offset/downlink offset is 0, it indicates that the first frequency unit does not need to be shifted based on the uplink offset/downlink offset. When the first frequency unit does not need to be shifted based on the uplink offset/downlink offset, the uplink offset/downlink offset is 7.5 kHz, so that it can be ensured that the boundary of the carrier of the first frequency unit is aligned with the boundary of the subcarrier of the LTE system.

In a possible implementation, the method further includes: The first device receives first configuration information. The first configuration information indicates one of the following: the uplink offset, the downlink offset, and the frequency domain spacing between the downlink frequency position and the uplink frequency position.

In the communication method provided in this implementation, system overheads of the first device are reduced.

In a possible implementation, when the second frequency unit is located in an uplink transmission frequency band, the uplink frequency unit in the first frequency unit is located in the transmission bandwidth of the second frequency unit, and the downlink frequency unit in the first frequency unit is located in the guard band of the second frequency unit. Alternatively, when the second frequency unit is located in a downlink transmission frequency band, the downlink frequency unit is located in the transmission bandwidth of the second frequency unit, and the uplink frequency unit is located in the guard band of the second frequency unit. Alternatively, when the first frequency unit is located in a TDD operating band, and both the downlink signal transmitted on the downlink frequency unit and the uplink signal that is transmitted on the uplink frequency unit and that corresponds to the downlink signal occupy the downlink time domain resource, the downlink frequency unit is located in the transmission bandwidth of the second frequency unit, and the uplink frequency unit is located in the guard band of the second frequency unit. Alternatively, when the first frequency unit is located in a TDD operating band, and both the downlink signal transmitted on the downlink frequency unit and the uplink signal that is transmitted on the uplink frequency unit and that corresponds to the downlink signal occupy the uplink time domain resource, the downlink frequency unit is located in the guard band of the second frequency unit, and the uplink frequency unit is located in the guard band of the second frequency unit.

In the communication method provided in this implementation, for various scenarios in which there may be a problem of different directions of receiving and sending, the downlink frequency unit and the uplink frequency unit in the first frequency unit are separately deployed in the transmission bandwidth or the guard band of the second frequency unit, to avoid a problem of signal interference caused by the different directions of receiving and sending between the first frequency unit and the second frequency unit.

In a possible implementation, the method further includes: The first device sends the first configuration information to the second device. The first configuration information indicates at least one of the following: the uplink offset, the frequency domain spacing between the downlink frequency position and the uplink frequency position, and the uplink frequency unit.

In the communication method provided in this implementation, the first device can flexibly configure the second device, and system overheads of the second device are reduced. In addition, the first device provides, for the second device, a parameter that cannot be determined based on a capability of the second device, to implement communication between the second device and the first device.

According to a second aspect, an embodiment of this application provides a communication apparatus. The communication apparatus may perform the steps in the first aspect. For example, the communication apparatus may include: a processing unit, configured to determine a first frequency unit; and a transceiver unit, configured to communicate with a second device on the first frequency unit. A granularity of a first channel raster corresponding to the first frequency unit is less than or equal to a granularity of a second channel raster corresponding to a second frequency unit. The second frequency unit is used for communication between the communication apparatus and a third device. The first frequency unit and the second frequency domain unit are located in a same operating band.

For beneficial effects of the communication apparatus provided in the second aspect and the possible implementations of the second aspect, refer to the beneficial effects brought by the first aspect and the possible implementations of the first aspect. Details are not described herein again.

According to a third aspect, an embodiment of this application provides a communication device, including a processor and a memory. The memory is configured to store a computer program. The processor is configured to invoke and run the computer program stored in the memory, to perform the method according to any one of the first aspect or the possible implementations.

According to a fourth aspect, an embodiment of this application provides a chip, including a processor, configured to invoke computer instructions from a memory and run the computer instructions, to cause a device in which the chip is installed to perform the method according to any one of the first aspect or the possible implementations.

According to a fifth aspect, an embodiment of this application provides a computer-readable storage medium, configured to store computer program instructions. The computer program causes a computer to perform the method according to any one of the first aspect or the possible implementations.

According to a sixth aspect, an embodiment of this application provides a computer program product, including computer program instructions. The computer program instructions cause a computer to perform the method according to any one of the first aspect or the possible implementations.

## BRIEF DESCRIPTION OF DRAWINGS

FIG. 1 shows a communication system applicable to an embodiment of this application;
FIG. 2a is a diagram of an RFID communication system according to this application;
FIG. 2b is a diagram of an RFID communication system of a split architecture according to this application;
FIG. 2c is a diagram of an RFID communication system of a centralized architecture according to this application;
FIG. 3a is a diagram of a type of WUR communication according to this application;
FIG. 3b is a diagram of another type of WUR communication according to this application;
FIG. 4 is a diagram of envelope detection according to this application;
FIG. 5 is a diagram of backscatter communication according to this application;
FIG. 6 is a diagram of a common resource block according to this application;
FIG. 7 is a diagram of a frequency domain position relationship between a bandwidth part and a carrier according to this application;

FIG. 8 is a schematic interaction flowchart of a communication method 400 according to an embodiment of this application;

FIG. 9a is a diagram of a deployment mode of a frequency unit according to an embodiment of this application;

FIG. 9b is a diagram of another deployment mode of a frequency unit according to an embodiment of this application;

FIG. 9c is a diagram of another deployment mode of a frequency unit according to an embodiment of this application;

FIG. 10 is a diagram of a frequency unit according to an embodiment of this application;

FIG. 11 is an interaction flowchart of a communication method 500 according to an embodiment of this application;

FIG. 12a is a diagram of a type of uplink/downlink transmission in an FDD mode according to an embodiment of this application;

FIG. 12b is a diagram of another type of uplink/downlink transmission in an FDD mode according to an embodiment of this application;

FIG. 12c is a diagram of another type of uplink/downlink transmission in an FDD mode according to an embodiment of this application;

FIG. 13a is a diagram of a type of uplink/downlink transmission in a TDD mode according to an embodiment of this application;

FIG. 13b is a diagram of another type of uplink/downlink transmission in a TDD mode according to an embodiment of this application;

FIG. 13c is a diagram of another type of uplink/downlink transmission in a TDD mode according to an embodiment of this application;

FIG. 14a is a diagram of a deployment mode of an uplink/downlink frequency unit according to an embodiment of this application;

FIG. 14b is a diagram of another deployment mode of an uplink/downlink frequency unit according to an embodiment of this application;

FIG. 14c is a diagram of another deployment mode of an uplink/downlink frequency unit according to an embodiment of this application;

FIG. 14d is a diagram of another deployment mode of an uplink/downlink frequency unit according to an embodiment of this application;

FIG. 15 is a block diagram of a communication apparatus according to an embodiment of this application; and

FIG. 16 is another block diagram of a communication apparatus according to an embodiment of this application.

## DESCRIPTION OF EMBODIMENTS

The following describes technical solutions of this application with reference to accompanying drawings.

A communication method provided in this application may be applied to various communication systems, for example, a wideband code division multiple access (Wideband Code Division Multiple Access, WCDMA) system, a general packet radio service (General Packet Radio Service, GPRS) system, a long term evolution (Long Term Evolution, LTE) system, an advanced long term evolution (Advanced long term evolution, LTE-A) system, a new radio (New Radio, NR) system, an evolved system of an NR system, an LTE in unlicensed spectrum (LTE-based access to unlicensed spectrum, LTE-U) system, an NR in unlicensed spectrum (NR-based access to unlicensed spectrum, NR-U) system, a non-terrestrial communication network (Non-Terrestrial Network, NTN) system, a universal mobile telecommunications system (Universal Mobile Telecommunications System, UMTS), a wireless local area network (Wireless Local Area Network, WLAN), wireless fidelity (Wireless Fidelity, Wi-Fi), a 5th generation (5th Generation, 5G) communication system, or another communication system.

A terminal device may be a station (STATION, ST) in a WLAN, may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next generation communication system, for example, an NR network, or a terminal device in a future evolved public land mobile network (Public Land Mobile Network, PLMN) network, or the like.

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like.

By way of example, and not limitation, in embodiments of this application, the terminal device may alternatively be a wearable device. The wearable device may also be referred to as a wearable intelligent device, and is a general term of wearable devices that are intelligently designed and developed for daily wear by using wearable technologies, for example, glasses, gloves, watches, clothing, and shoes. The wearable device is a portable device that can be directly worn on the body or integrated into clothes or an accessory of a user.

In embodiments of this application, a network device may be a device configured to communicate with a mobile device. The network device may be an access point (Access Point, AP) in a WLAN, a base transceiver station (Base Transceiver Station, BTS) in a GSM or CDMA, a NodeB (NodeB, NB) in WCDMA, an evolved NodeB (Evolved NodeB, eNB or eNodeB) in LTE, a relay station, an access point, a vehicle-mounted device, a wearable device, a network device or a gNB (gNB) in an NR network, a network device in a future evolved PLMN network, a network device in an NTN network, or the like.

In embodiments of this application, the network device may provide a service for a cell, and the terminal device communicates with the network device by using a transmission resource (for example, a frequency domain resource, or referred to as a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells have characteristics of small coverage and low transmit power, and are applicable to providing of a high-rate data transmission service.

It should be understood that specific forms of the network device and the terminal device are not limited in this application.

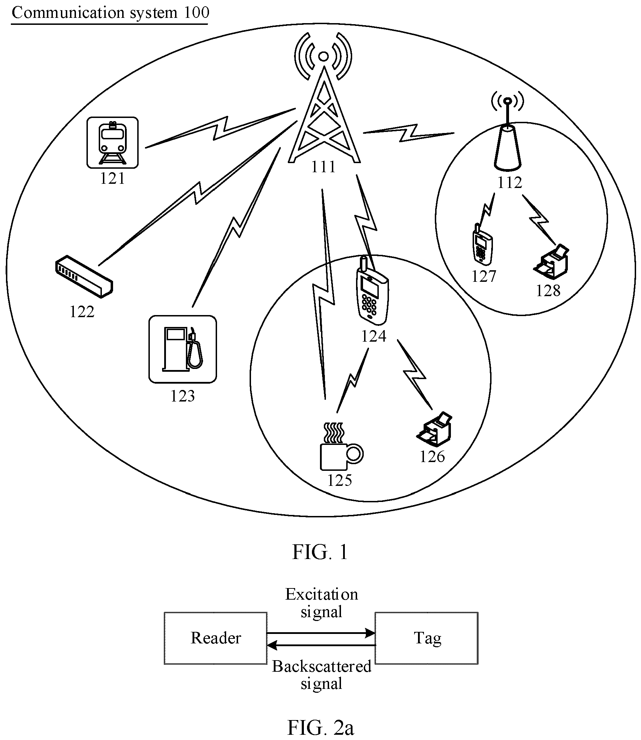

For ease of understanding of embodiments of this application, a communication system applicable to embodiments of this application is first described in detail with reference to FIG. 1. FIG. 1 is a diagram of a communication system applicable to a communication method according to an embodiment of this application. As shown in FIG. 1, the communication system 100 may include a network device and a terminal device. There may be one or more network devices and one or more terminal devices, for example, network devices 111 and 112 and terminal devices 121 to 128 shown in FIG. 1. In the communication system 100, the network device 111 may communicate with one or more of the terminal devices 121 to 126 through a wireless air interface, and the network device 111 may communicate with one or more of the terminal devices 127 and 128 via the network device 112. In addition, the terminal devices 124 to 126 may form a communication system 101. In the communication system 101, the terminal device 124 may communicate with one or more of the terminal devices 125 and 126 through a wireless air interface. The network device 112 and the terminal devices 127 and 128 may form a communication system 102. In the communication system 102, the network device 112 may communicate with the one or more of the terminal devices 127 and 128 through a wireless air interface.

It should be understood that the communication system 101 may be a subsystem of the communication system 100, or a communication system independent of the communication system 100. The communication system 102 may be a subsystem of the communication system 100, or a communication system independent of the communication system 100.

It should be further understood that FIG. 1 is merely an example, and shows two network devices and eight terminal devices in the communication system 100, where three terminal devices are in the communication system 101, and one network device and two terminal devices are in the communication system 102. However, this shall not constitute any limitation on this application. Any one of the foregoing communication systems may include more or fewer network devices, or include more or fewer terminal devices. This is not limited in this embodiment of this application.

With popularization of MTC and internet of things (internet of things, IoT) communication in a 5G NR system, more IoT devices have been deployed in people's life, for example, devices targeted at sensing and data collection, such as smart water meters, shared bicycles, smart cities, environment monitoring, smart homes, and forest fire prevention. Therefore, in the future, an IoT device will be ubiquitous, and may be embedded in every piece of clothing, every package, and every key. Almost all offline objects will be online with the enablement of internet of things technologies.

To further popularize IoT, and implant an IoT module in a human body or a smaller object, a smaller battery needs to be used or even a battery limitation needs to be completely removed, or a method for reducing power consumption of a radio transceiver is designed, to overcome limitation problems of costs, a size, power consumption, and the like of the IoT device. Therefore, passive (Passive) IoT and a WUR are introduced in the 5G NR system. The passive IoT is developed based on inspiration from current RFID technologies that are used maturely in a large quantity. Because a power supply module is omitted, a size of a passive RFID product can reach a centimeter level or even a smaller level. In addition, due to a simple structure of the passive RFID product and low costs, a low failure rate and a long service life are achieved.

The following first describes an RFID technology and a WUR technology.

1. RFID technology: The RFID technology is a non-contact automatic identification technology, and can automatically identify a target object and obtain related data by using a radio frequency signal.

Usually, an RFID system includes a reader (reader) and a tag (tag). With reference to FIG. 2a, the reader sends an excitation signal to the tag, to charge the tag. The tag receives signaling sent by the reader, and sends a backscattered signal to the reader in a backscatter communication manner. In this way, the reader can identify an identifier (identity document, ID) of the tag and perform an operation like a read/write operation on the tag.

It needs to be noted that the excitation signal sent by the reader to the tag may be a downlink signal or one of downlink signals in the following, and the backscattered signal may be an uplink signal or one of uplink signals in the following. The tag sends the backscattered signal to the reader in the backscatter communication manner, and specifically, the tag transmits the uplink signal by using a carrier provided by the downlink signal.

Currently, to extend an effective working distance of RFID, the following two manners are usually used.

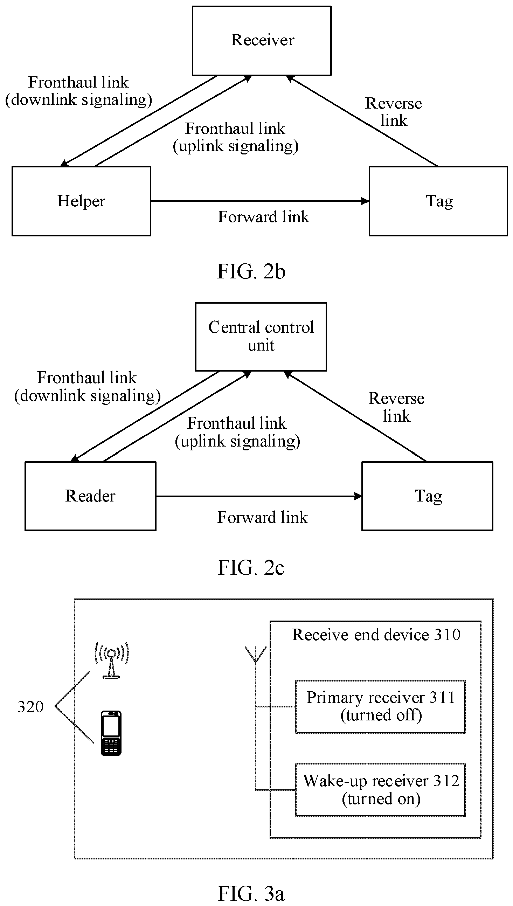

Manner 1: Split architecture: With reference to FIG. 2b, a split-type reader includes a helper (helper) and a receiver (receiver). The helper sends an excitation signal to the tag over a forward link, and the receiver receives a backscattered signal from the tag over a reverse link. In addition, the receiver generates RFID-related downlink signaling and sends the downlink signaling to the helper over a fronthaul link. The helper then forwards the downlink signaling over the forward link.

Manner 2: Centralized or integrated architecture: With reference to FIG. 2c, in addition to excitation and backscatter of signals between the reader and the tag over the forward link and the reverse link, the reader further communicates with a central control unit (for example, a base station), and the central control unit may perform scheduling, control, and the like on resources of the forward link that are used by the reader and sending behavior.

In this embodiment of this application, to support the RFID in an NR system, an NR technology may be used for communication between the helper and the receiver in Manner 1 and communication between the reader and the central control unit in Manner 2.

2. WUR technology: After primary connection radio (primary connection radio, PCR) with high power consumption, which may also be referred to as a primary receiver, enters a sleep state, companion radio (Companion Radio) with low power consumption, which is also referred to as a wake-up receiver (WUR), monitors a wake-up frame sent by an AP, and wakes up the PCR after the companion radio detects the wake-up frame through monitoring.

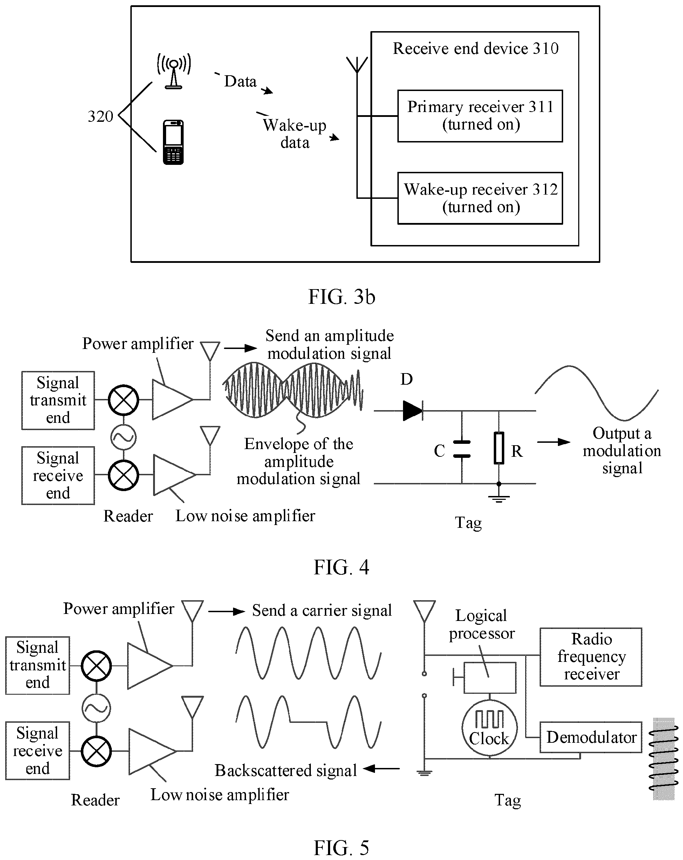

With reference to FIG. 3a, a primary receiver 311 and a wake-up receiver 312 are deployed in a receive end device 310. When a transmit end device 320 (for example, an AP or a terminal device) does not send data, the primary receiver is turned off, which is also referred to as being in a sleep state, and the wake-up receiver is turned on. With reference to FIG. 3b, when the transmit end device 320 sends data, the transmit end device 320 first sends wake-up data (for example, the foregoing wake-up frame), and the receive end device 310 activates the primary receiver 312 after the receive end device 310 receives the wake-up data via the wake-up receiver 311, so that the primary receiver is turned on, which is also referred to as being in an active state. In this case, the receive end device 310 receives, via the primary receiver 311, the data sent by the transmit end device 320 after the transmit end device 320 sends the wake-up data.

It needs to be noted that an information bit of the wake-up machine is modulated into an on-off keying (on-off keying, OOK) symbol. On a receive end device side, OOK demodulation does not need any channel equalization in frequency domain and time domain. Therefore, the receive end device performs incoherent detection (for example, envelope detection) via the wake-up receiver, to perform monitoring. When the incoherent detection is performed, the receive end device does not need to maintain/trace a high-precision oscillation rate. Therefore, a phase-locked loop can be avoided, to further reduce power consumption on a receive side.

It should be understood that the OOK symbol is merely an example of a WUR wake-up frame, and does not constitute any limitation on this application.

The RFID technology applied to the NR system may be, for example, referred to as the passive (Passive) IoT. A passive IoT transmission mechanism provided in this application is similar to an RFID transmission mechanism. In the passive IoT, a passive IoT device (for example, a tag) may be battery-free (Battery-Free), in other words, the passive IoT device is not equipped with or does not mainly rely on a battery or a wired power supply for power supply. However, that the passive IoT device does not have a power supply module does not mean that the passive IoT device does not need to use power. The passive IoT device may obtain energy from ambient light, heat, and radio frequency, to support sensing, wireless transmission, distributed computing, and the like of internet of things data. The passive IoT device may alternatively be a passive energy storage device, or may be a semi-passive device. The passive energy storage device has an energy storage device. The semi-passive device has a battery, but power supply of the battery only provides auxiliary support for a circuit that needs power supply to maintain data in the tag or a voltage needed for working of a tag chip, or a tag circuit that consumes little power. In addition, a battery size is relatively small.

For example, FIG. 4 and FIG. 5 are diagrams of uplink and downlink communication methods in passive IoT communication.

As shown in FIG. 4, for example, FIG. 4 is a diagram of a downlink communication method in passive IoT.

A tag sends an amplitude modulation signal to a reader over a downlink, and the tag receives the amplitude modulation signal. An envelope detector may be used to perform envelope detection on the amplitude modulation signal to obtain a low frequency signal in the amplitude modulation signal. The envelope detector mainly includes a diode and a resistor-capacitor circuit (resistor-capacitor circuit, RC) shown in FIG. 4, that is, an oscillator circuit.

It may be understood that an envelope detection circuit shown in FIG. 4 is a diagram of a structure of a most conventional basic circuit. For an evolved structure of the envelope detection circuit, details are not described herein. A structure of the envelope detection circuit used by the tag is not limited in this embodiment of this application.

As shown in FIG. 5, for example, FIG. 5 is a diagram of an uplink communication method in passive IoT.

A tag cannot provide a power supply, and no condition for connecting to a wired power supply is present for data transmission performed by the tag. Therefore, the tag needs to obtain energy from an external environment to enable the tag to perform data transmission and other operations such as data processing.

Specifically, when receiving a carrier signal sent by a reader, the tag may use energy obtained from an electromagnetic field generated in space, to drive a chip to transmit information stored in the tag.

It may be understood that the uplink communication method in passive IoT communication shown in FIG. 5 is merely an example. In some other embodiments of this application, the tag may further obtain energy such as ambient light and heat, to drive the chip to transmit the information stored in the tag. As described above, the tag may also be a passive energy storage device or a semi-passive device.

It should be understood that the passive IoT is merely an example name, and another replacement representation also falls within the protection scope of this application.

It should be further understood that an information exchange procedure and a signaling format in a passive IoT scenario are merely an example, and are not limitative description.

Currently, to apply an RFID technology, a WUR technology, or a similar technology to communication systems, how to determine a frequency unit between first devices (for example, a reader, an AP, and a terminal device on a transmit side) in an NR system and transmit uplink data or downlink data on the frequency unit is a problem to be urgently resolved currently.

For the foregoing problem, embodiments of this application provide a solution for determining the frequency unit, so that a first device and a second device can communicate with each other in an NR system, an LTE system, or another similar communication system. Certainly, the solution that is for determining the frequency unit and that is provided in this application is not limited to the RFID technology, the WUR technology, or the similar technology above. No matter which technology is used, for inter-device communication, the frequency unit for communication may be determined based on the solution provided in embodiments of this application.

Further, in embodiments of this application, frequency units (for example, a first frequency unit used for communication with the second device and a second frequency unit used for communication with a third device) for communication between the first device and different devices are located in a same operating band. When the frequency unit is determined, a granularity of a channel raster is considered, for example, a granularity of a first channel raster corresponding to the first frequency unit is set to a smaller value, to improve flexibility of deploying the frequency unit.

To help understand embodiments of this application, terms used in this application are first briefly described.

1. Operating band:

In 5G NR, two frequency ranges are defined, including a frequency range (frequency range, FR) 1 and an FR 2. The FR 1 represents a low-frequency band, and the FR 2 represents a millimeter-wave high-frequency band.

For example, NR may work in an operating band of the FR 1 shown in Table 1, and the FR 1 includes a plurality of operating bands of NR. Each operating band has a corresponding number, a lower frequency boundary and an upper frequency boundary of uplink transmission (for example, transmission from a terminal to a base station), a lower frequency boundary and an upper frequency boundary of downlink transmission (for example, transmission from the base station to the terminal), and a duplex mode. As shown in Table 1, for an operating band numbered n1, a lower frequency boundary $F_{UL\_low}$ of uplink transmission of the operating band is 1920 MHz, an upper frequency boundary $F_{UL\_high}$ of the uplink transmission of the operating band is 1980 MHz, a lower frequency boundary $F_{DL\_low}$ of downlink transmission of the operating band is 2110 MHz, an upper frequency boundary $F_{DL\_high}$ of the downlink transmission of the operating band is 2170 MHz, and a duplex mode used by the operating band is frequency division duplex (frequency division duplex, FDD). Still as shown in Table 1, for an operating band numbered n39, lower frequency boundaries of both uplink transmission and downlink transmission of the operating band are 1880 MHz, upper frequency boundaries of both the uplink transmission and the downlink transmission of the operating band are 1920 MHz, and a duplex mode used by the operating band is time division duplex (time division duplex, TDD).

**Table 1**

| NR operating band (operating band) | Uplink (UL) operating band: BS receiving/UE sending $F_{UL\_low}$ to $F_{UL\_high}$ | Downlink (DL) operating band: BS sending/UE receiving $F_{DL\_low}$ to $F_{DL\_high}$ | Duplex mode (duplex mode) |
|---|---|---|---|
| n1 | 1920 MHz to 1980 MHz | 2110 MHz to 2170 MHz | FDD |
| n2 | 1850 MHz to 1910 MHz | 1930 MHz to 1990 MHz | FDD |
| n3 | 1710 MHz to 1785 MHz | 1805 MHz to 1880 MHz | FDD |
| n5 | 824 MHz to 849 MHz | 869 MHz to 894 MHz | FDD |
| n7 | 2500 MHz to 2570 MHz | 2620 MHz to 2690 MHz | FDD |
| n8 | 880 MHz to 915 MHz | 925 MHz to 960 MHz | FDD |
| n12 | 699 MHz to 716 MHz | 729 MHz to 746 MHz | FDD |
| n13 | 777 MHz to 787 MHz | 746 MHz to 756 MHz | FDD |
| n14 | 788 MHz to 798 MHz | 758 MHz to 768 MHz | FDD |
| n18 | 815 MHz to 830 MHz | 860 MHz to 875 MHz | FDD |
| n20 | 832 MHz to 862 MHz | 791 MHz to 821 MHz | FDD |
| n24[16] | 1626.5 MHz to 1660.5 MHz | 1525 MHz to 1559 MHz | FDD |
| n25 | 1850 MHz to 1915 MHz | 1930 MHz to 1995 MHz | FDD |
| n26 | 814 MHz to 849 MHz | 859 MHz to 894 MHz | FDD |
| n28 | 703 MHz to 748 MHz | 758 MHz to 803 MHz | FDD |
| n29 | N/A | 717 MHz to 728 MHz | SDL |
| n30[3] | 2305 MHz to 2315 MHz | 2350 MHz to 2360 MHz | FDD |
| n34 | 2010 MHz to 2025 MHz | 2010 MHz to 2025 MHz | TDD |
| n38[10] | 2570 MHz to 2620 MHz | 2570 MHz to 2620 MHz | TDD |
| n39 | 1880 MHz to 1920 MHz | 1880 MHz to 1920 MHz | TDD |
| n40 | 2300 MHz to 2400 MHz | 2300 MHz to 2400 MHz | TDD |
| n41 | 2496 MHz to 2690 MHz | 2496 MHz to 2690 MHz | TDD |
| n46 | 5150 MHz to 5925 MHz | 5150 MHz to 5925 MHz | TDD[13] |
| n47[11] | 5855 MHz to 5925 MHz | 5855 MHz to 5925 MHz | TDD |
| n48 | 3550 MHz to 3700 MHz | 3550 MHz to 3700 MHz | TDD |
| n50 | 1432 MHz to 1517 MHz | 1432 MHz to 1517 MHz | TDD[1] |
| n51 | 1427 MHz to 1432 MHz | 1427 MHz to 1432 MHz | TDD |
| n53 | 2483.5 MHz to 2495 MHz | 2483.5 MHz to 2495 MHz | TDD |
| n65 | 1920 MHz to 2010 MHz | 2110 MHz to 2200 MHz | FDD[4] |
| n66 | 1710 MHz to 1780 MHz | 2110 MHz to 2200 MHz | FDD |
| n67 | N/A | 738 MHz to 758 MHz | SDL |
| n70 | 1695 MHz to 1710 MHz | 1995 MHz to 2020 MHz | FDD |
| n71 | 663 MHz to 698 MHz | 617 MHz to 652 MHz | FDD |
| n74 | 1427 MHz to 1470 MHz | 1475 MHz to 1518 MHz | FDD |
| n75 | N/A | 1432 MHz to 1517 MHz | SDL |
| n76 | N/A | 1427 MHz to 1432 MHz | SDL |

(continued)

| NR operating band (operating band) | Uplink (UL) operating band: BS receiving/UE sending $F_{UL\_low}$ to $F_{UL\_high}$ | Downlink (DL) operating band: BS sending/UE receiving $F_{DL\_low}$ to $F_{DL\_high}$ | Duplex mode (duplex mode) |
|---|---|---|---|
| n77[12] | 3300 MHz to 4200 MHz | 3300 MHz to 4200 MHz | TDD |
| n78 | 3300 MHz to 3800 MHz | 3300 MHz to 3800 MHz | TDD |
| n79 | 4400 MHz to 5000 MHz | 4400 MHz to 5000 MHz | TDD |
| n80 | 1710 MHz to 1785 MHz | N/A | SUL |
| n81 | 880 MHz to 915 MHz | N/A | SUL |
| n82 | 832 MHz to 862 MHz | N/A | SUL |
| n83 | 703 MHz to 748 MHz | N/A | SUL |
| n84 | 1920 MHz to 1980 MHz | N/A | SUL |
| n85 | 698 MHz to 716 MHz | 728 MHz to 746 MHz | FDD |
| n86 | 1710 MHz to 1780 MHz | N/A | SUL |
| n89 | 824 MHz to 849 MHz | N/A | SUL |
| n90 | 2496 MHz to 2690 MHz | 2496 MHz to 2690 MHz | TDD[5] |
| n91 | 832 MHz to 862 MHz | 1427 MHz to 1432 MHz | FDD[9] |
| n92 | 832 MHz to 862 MHz | 1432 MHz to 1517 MHz | FDD[9] |
| n93 | 880 MHz to 915 MHz | 1427 MHz to 1432 MHz | FDD[9] |
| n94 | 880 MHz to 915 MHz | 1432 MHz to 1517 MHz | FDD[9] |
| n95[8] | 2010 MHz to 2025 MHz | N/A | SUL |
| n96[14] | 5925 MHz to 7125 MHz | 5925 MHz to 7125 MHz | TDD[13] |
| n97[15] | 2300 MHz to 2400 MHz | N/A | SUL |
| n98[15] | 1880 MHz to 1920 MHz | N/A | SUL |
| n99[16] | 1626.5 MHz to 1660.5 MHz | N/A | SUL |

In addition to the foregoing FDD and TDD duplex modes, the duplex mode used by NR may further include supplementary downlink (supplementary downlink, SDL) for increasing downlink coverage of NR, and supplementary uplink (supplementary uplink, SUL) for increasing uplink coverage of NR, as shown in Table 1. Both the SDL and the SUL are independent operating bands that do not exist in pairs.

2. Numerology (numerology): In the NR system, to adapt to OFDM waveforms of a plurality of different subcarrier spacings, the numerology is introduced, so that the subcarrier spacings are not limited, and can be adapted based on different application scenarios.

A transmission numerology supported by the NR system is shown in Table 2.

**Table 2**

| $\mu$ | $\Delta f = 2^{\mu} \cdot 15$ [kHz] | Cyclic prefix (cyclic prefix) |
|---|---|---|
| 0 | 15 | Normal (normal) |
| 1 | 30 | Normal |
| 2 | 60 | Normal and extended (extended) |
| 3 | 120 | Normal |
| 4 | 240 | Normal |

$\Delta f$ is a subcarrier spacing, and $\mu$ is an integer greater than or equal to 0.

2. Antenna port: The antenna port is defined, so that a channel of a symbol whose transmission is performed on the antenna port can be inferred from a channel of another symbol transmitted on the same antenna port, in other words, channel environments experienced by different signals transmitted on the same antenna port are the same.

3. Resource grid (resource grid), or referred to as a resource grid: One resource grid corresponds to one numerology and one carrier The resource grid includes $N_{\text{grid},x}^{\text{size},\mu} N_{\text{sc}}^{\text{RB}}$ subcarriers and $N_{\text{symb}}^{\text{subframe},\mu}$ OFDM symbols. $N_{\text{grid},x}^{\text{size},\mu}$ represents a quantity of resource blocks (resource elements, RBs) in one resource grid when a subcarrier spacing configuration is $\mu$. $N_{\text{sc}}^{\text{RB}}$ represents a quantity of subcarriers in one RB. Optionally, $N_{\text{sc}}^{\text{RB}}$ is equal to 12 consecutive subcarriers.

It should be understood that there is one group of resource grids in each transmission direction (an uplink or a downlink). For a given antenna port p, the subcarrier spacing configuration $\mu$, and the transmission direction (the downlink or the uplink), there is one resource grid.

A start resource block of the resource grid is a common resource block (common resource block, CRB).

4. Resource element (resource element, RE): Each element in the resource grid used for the antenna port p and the subcarrier spacing configuration $\mu$ is referred to as a resource element, and is uniquely identified by $(k,l)_{p,\mu}$, where k is an index of the RE in frequency domain, and 1 is a position of a symbol that is of the RE and that is relative to a reference point in time domain. The resource element $(k,l)_{p,\mu}$ corresponds to a physical resource and a complex value $a_{k,l}^{(p,\mu)}$. When there is no risk for confusion, or no specific antenna port or subcarrier spacing is specified, the index p and the index $\mu$ may be dropped, resulting in $a_{k,l}^{(p,\mu)}$ or $a_{k,l}$.

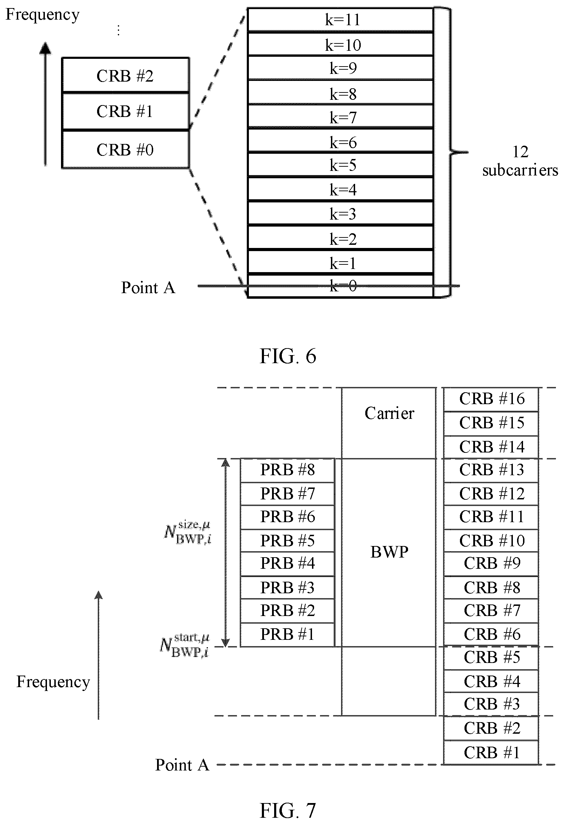

5. Common resource block (common resource block): For the subcarrier spacing configuration $\mu$, common resource blocks are numbered from 0 in ascending order in frequency domain. A center frequency of a subcarrier 0 of a common resource block 0 in the subcarrier spacing configuration $\mu$ overlaps a common reference point, namely, a point A, of the resource grid. Refer to FIG. 6.

6. Physical resource block (physical resource block): A physical resource block of the subcarrier spacing configuration $\mu$ is defined in a bandwidth part (bandwidth part, BWP).

7. BWP: For a given numerology $\mu_i$ in a BWP $i$ on a given (given) carrier (carrier), the BWP is a subset of consecutive CRBs. A frequency position relationship between the BWP and the carrier may be shown in FIG. 7.

Usually, a terminal device may be configured with up to four BWPs on a downlink, and one downlink BWP is in an active state at a given time. A terminal device may be configured with up to four BWPs on an uplink, and one uplink BWP is in an active state at a given time. If the terminal device is configured with a supplementary (supplementary) uplink, the terminal device may be additionally configured with up to four bandwidth parts on the supplementary uplink, where a single supplementary uplink BWP is active at a given time.

8. Global frequency raster (global frequency raster)

In the NR system, the global frequency raster defines a group of radio frequency (radio frequency, RF) reference frequencies $F_{\text{REF}}$ The RF reference frequency is used in signaling to identify positions of an RF channel, a synchronization signal (synchronization signal, SS) block, and another element. The global frequency raster is defined for all frequencies from 0 to 100 GHz. A granularity of the global frequency raster is $\Delta F_{\text{Global}}$.

When a frequency range is 0 to 24250 MHz, the RF reference frequency is specified by an NR absolute radio frequency channel number (NR absolute radio frequency channel number, NR-ARFCN) within a range (0 to 2016666) on the global frequency raster. A relationship between the NR-ARFCN and the RF reference frequency $F_{\text{REF}}$ (MHz) is given in the following equation. $F_{\text{REF-Offs}}$ and $N_{\text{Ref-Offs}}$ are given in Table 3, and $N_{\text{REF}}$ is the NR-ARFCN.

$$F_{\text{REF}}=F_{\text{REF-Offs}}+\Delta F_{\text{Global}}(N_{\text{REF}}-N_{\text{REF-Offs}})$$

**Table 3**

| Frequency range (MHz) | $\Delta F_{\text{Global}}$ (kHz) | $F_{\text{REF-Offs}}$ (MHz) | $N_{\text{REF-Offs}}$ | $N_{\text{REF}}$ range |
|---|---|---|---|---|
| 0 to 3000 | 5 | 0 | 0 | 0 to 599999 |
| 3000 to 24250 | 15 | 3000 | 600000 | 600000 to 2016666 |

9. Channel raster

In the NR system, the channel raster defines a subset of a radio frequency reference frequency, and may be used to identify positions of radio frequency channels in uplink transmission and downlink transmission. An RF reference frequency of an RF channel is mapped onto a resource element on a carrier For each operating frequency band, a frequency subset from the global frequency raster is applicable to the frequency band, and forms a channel raster whose granularity is $\Delta F_{Raster}$, where the $\Delta F_{Raster}$ may be greater than or equal to $\Delta F_{Global}$. For example, for an NR operating frequency band having a 100 kHz channel raster, $\Delta F_{Raster} = 20 \times \Delta F_{Global}$, for example, operating bands n1 and n2. For a channel raster of each operating band and an applicable NR-ARFCN in the NR system, refer to Table 5.4.2.3-1 in 3GPP TS38.101-1 V17.3.0. For NR-ARFCNs allowed in frequency bands n46 and n47, respectively refer to Table 5.4.2.3-2 and Table 5.4.2.3-3 in 3GPP TS38.101-1 V17.3.0. Due to a limitation of length, Table 4 is only an excerpt from Table 5.4.2.3-1.

**Table 4**

| NR deployment frequency band (operating band) | $\Delta F_{Raster}$ (kHz) | Uplink $N_{REF}$ range (First - \<Step size\> - Last) | Downlink $N_{REF}$ range (First - \<Step size\> - Last) |
|---|---|---|---|
| n1 | 100 | 384000 - \<20\> - 396000 | 422000 - \<20\> - 434000 |
| n2 | 100 | 370000 - \<20\> - 382000 | 386000 - \<20\> - 398000 |
| n3 | 100 | 342000 - \<20\> - 357000 | 361000 - \<20\> - 376000 |
| n5 | 100 | 164800 - \<20\> - 169800 | 173800 - \<20\> - 178800 |
| n7 | 100 | 500000 - \<20\> - 514000 | 524000 - \<20\> - 538000 |
| n8 | 100 | 176000 - \<20\> - 183000 | 185000 - \<20\> - 192000 |
| n12 | 100 | 139800 - \<20\> - 143200 | 145800 - \<20\> - 149200 |
| n13 | 100 | 155400 - \<20\> - 157400 | 149200 - \<20\> - 151200 |

For mapping between an RF reference frequency on a channel raster and a corresponding resource element, refer to Table 5. A position of an RF channel may be determined based on a mapping relationship shown in Table 5. The mapping depends on a total quantity $N_{RB}$ of resource blocks (resource blocks, RBs) allocated to the RF channel. For example, if the total quantity $N_{RB}$ of resource blocks allocated to the RF channel is an even number, the RF channel

$$n_{PRB} = \left\lfloor \frac{N_{RB}}{2} \right\rfloor$$

is located on a resource element whose physical resource block number is and whose resource element index is k=0. Alternatively, if the total quantity $N_{RB}$ of resource blocks allocated to the RF channel is an odd

$$n_{PRB} = \left\lfloor \frac{N_{RB}}{2} \right\rfloor$$

number, the RF channel is located on a resource element whose physical resource block index is and whose resource element index is k=6.

The mapping relationship between the RF reference frequency and the resource element is applicable to an uplink (uplink, UL) and a downlink (downlink, DL) in the NR system.

**Table 5**

| | $N_{RB}$ mod 2=0 | $N_{RB}$ mod 2= 1 |
|---|---|---|
| Resource element index $k$ | 0 | 6 |
| Physical resource block index $n_{PRB}$ | $n_{PRB} = \left\lfloor \frac{N_{RB}}{2} \right\rfloor$ | $n_{PRB} = \left\lfloor \frac{N_{RB}}{2} \right\rfloor$ |

a mod b represents a remainder obtained by dividing a by b.

For ease of understanding of embodiments of this application, the following several descriptions are provided.

First, in the following embodiments, first, second, and various numbers are merely used for differentiation for ease of description, and are not used to limit the scope of embodiments of this application. For example, differentiation between different devices, frequency units, and channel rasters is performed.

Second, a "protocol" included in embodiments of this application may refer to a standard protocol in the communication field, for example, may include an LTE protocol, an NR protocol, and a related protocol applied to a future communication system. This is not limited in this application.

Third, in embodiments of this application, descriptions such as "when", "in a case", and "if" all mean that a device (for example, a network device or a terminal device) performs corresponding processing in an objective case, and do not limit time. In addition, the device (for example, the network device or the terminal device) is not necessarily needed to perform a determining action during implementation, and this does not mean that there is another limitation.

The following describes a sidelink transmission method provided in embodiments of this application in detail with reference to the accompanying drawings.

It should be understood that, merely for ease of understanding and description, interaction between a first device and a second device is used as an example below to describe in detail the method provided in embodiments of this application.

The first device may be, for example, the foregoing tag, or a terminal device on which a tag-related apparatus (or having a tag-related function) is deployed. The second device may be the foregoing reader, a terminal device on which a reader-related apparatus (or having a reader-related function) is deployed, or a network device on which a reader-related apparatus is deployed. When the first device is the terminal device on which the tag-related apparatus is deployed, and the second device is the terminal device on which the reader-related apparatus is deployed, the first device may be the terminal device 125 or 126 in FIG. 1, and the second device may be the terminal device 124 in FIG. 1. When the first device is a terminal device on which a tag is deployed, and the second device is a network device on which a reader is deployed, the first device may be any one of the terminal devices 121 to 123 in FIG. 1, and the second device may be the network device 111 in FIG. 1, or the first device may be the terminal device 127 or 128 in FIG. 1, and the second device may be the network device 112 in FIG. 1.

The first device may be, for example, the foregoing wake-up machine, or a terminal device on which a wake-up machine is deployed. The second device may be, for example, a network device (for example, a base station or an AP) or a terminal device. When the first device is the terminal device on which the wake-up machine is deployed, and the second device is the terminal device, the first device may be the terminal device 125 or 126 in FIG. 1, and the second device may be the terminal device 124 in FIG. 1. When the first device is the terminal device on which the wake-up machine is deployed, and the second device is the network device, the first device may be any one of the terminal devices 121 to 123 in FIG. 1, and the second device may be the network device 111 in FIG. 1, or the first device may be the terminal device 127 or 128 in FIG. 1, and the second device may be the network device 112 in FIG. 1.

Embodiments of this application further include a third device. The first device separately communicates with the second device and the third device via different frequency units. The third device may be a network device or a terminal device. This is not limited in this application.

However, it should be understood that this should not constitute any limitation on an execution body of the method provided in this application. Any device that can perform, by running a program that records code of the method provided in embodiments of this application, the method provided in embodiments of this application may be used as the execution body of the method provided in embodiments of this application. For example, a first device shown in the following embodiments may alternatively be replaced with a component in the first device, for example, a chip, a chip system, or another functional module that can invoke a program and execute the program. A second device may alternatively be replaced with a component in the second device, for example, a chip, a chip system, or another functional module that can invoke a program and execute the program. A third device may alternatively be replaced with a component in the third device, for example, a chip, a chip system, or another functional module that can invoke a program and execute the program.

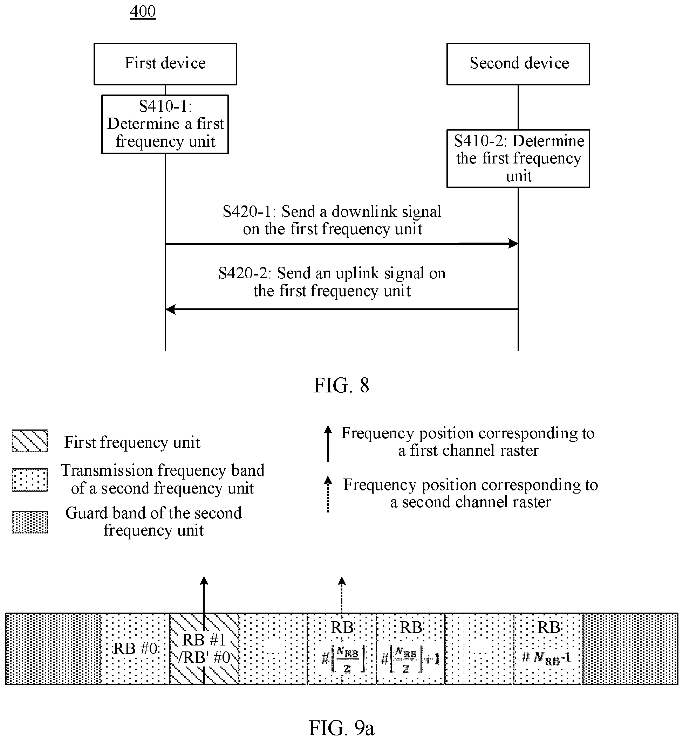

FIG. 8 is a schematic interaction flowchart of a communication method 400 according to an embodiment of this application. As shown in FIG. 8, the method 400 may include some or all of steps S410-1, S410-2, S420-1, and S420-2. The following describes each step in the method 400 in detail.

S410-1: A first device determines a first frequency unit.

S410-2: A second device determines the first frequency unit.

S420-1: The first device sends a downlink signal to the second device on the first frequency unit. Correspondingly, the second device receives the downlink signal from the first device on the first frequency unit.

S420-2: The second device sends an uplink signal to the first device on the first frequency unit. Correspondingly, the first device receives the uplink signal from the second device on the first frequency unit.

In other words, it is determined that the first frequency unit is used for communication between the first device and the second device. The communication may be sending a signal, or may be receiving a signal.

Execution of S410-1 and S410-2 is not subject to a specific sequence in this application. When the second device needs to determine the first frequency unit based on a configuration of the first device, S410-2 may be performed before S410-1.

Either S420-1 or S420-2 may be performed, or S420-1 and S420-2 may be performed sequentially. For example, after receiving the downlink signal sent by the first device, the second device sends the uplink signal to the first device. In this way, the first device communicates with the second device on the first frequency unit.

A granularity of a first channel raster corresponding to the first frequency unit is less than or equal to a granularity of a second channel raster corresponding to a second frequency unit. The second frequency unit is used for communication between the first device and a third device. The first frequency unit and the second frequency domain unit are located in a same operating band.

The first frequency unit may be a carrier or a BWP. For example, when the first device communicates with the second device based on a passive IoT technology, the first frequency unit may be a carrier configured for passive IoT (referred to as a passive IoT carrier for short). For another example, when the first device communicates with the second device based on a WUR technology, the first frequency unit may be a carrier configured for a WUR (referred to as a WUR carrier for short). The passive IoT carrier and the WUR carrier may be a same carrier or different carriers.

The first frequency unit may be a frequency unit used for uplink transmission, for example, an uplink frequency unit. Alternatively, the first frequency unit may be a frequency unit used for downlink transmission, for example, a downlink frequency unit. Alternatively, the first frequency unit includes a frequency unit used for uplink transmission and a frequency unit used for downlink transmission. In other words, the first frequency unit includes an uplink frequency unit and a downlink frequency unit. In some embodiments, the uplink frequency unit and the downlink frequency unit may be a same frequency unit. In other words, the first frequency unit is a frequency unit used for both uplink transmission and downlink transmission.

When the first frequency unit is an uplink frequency unit, S420-2 may include: The first device receives an uplink signal from the second device on the uplink frequency unit. Correspondingly, the second device sends the uplink signal to the first device on the uplink frequency unit. When the first frequency unit is a downlink frequency unit, S420-1 may include: The first device sends a downlink signal to the second device on the downlink frequency unit. Correspondingly, the second device receives the downlink signal from the first device on the downlink frequency unit. When the first frequency unit includes an uplink frequency unit and a downlink frequency unit, the first device sends a downlink signal to the second device on the downlink frequency unit in the first frequency unit, and receives an uplink signal from the second device on the uplink frequency unit in the first frequency unit.

When the first frequency unit is the WUR carrier, the downlink signal may be, for example, a wake-up signal, and the first device may send the wake-up signal to the second device on the downlink frequency unit.

When the first frequency unit is the passive IoT carrier, the downlink signal may be a carrier signal, or the downlink signal may be downlink signaling and/or data, and the uplink signal may be a backscattered signal that is based on the carrier signal. For example, the first device sends the carrier signal to the second device on the downlink frequency unit, and receives, on the uplink frequency unit, the backscattered signal sent by the second device in a backscatter communication manner based on the carrier signal. In this case, the carrier signal sent by the first device and the backscattered signal sent by the second device overlap in time domain.

A difference between the carrier signal and the downlink signaling/data lies in that: The carrier signal is used to provide a carrier for uplink backscatter, or may provide energy for a passive tag, and a waveform corresponding to the carrier signal may be a sine wave or a cosine wave at a given frequency, or amplitude modulation and/or phase modulation are/is not performed on a waveform corresponding to the carrier signal, or amplitude modulation and/or phase modulation are/is performed on a waveform corresponding to the carrier signal, but overall magnitude is not sufficient to be interpreted by a received side as transmitted data. Amplitude modulation and/or phase modulation are/is performed on a waveform corresponding to the downlink signaling/data, and overall magnitude is sufficient to be interpreted by the receive side as transmitted data.

It may be understood that before the second device communicates with the first device, the second device may determine the first frequency unit or obtain the first frequency unit from received first configuration information sent by the first device.

The second frequency unit may also be a carrier For example, the second frequency unit may be an NR carrier configured in an NR system. Similar to the first frequency unit, the second frequency unit may be a frequency unit used for uplink transmission, or a frequency unit used for downlink transmission, or include a frequency unit used for uplink transmission and a frequency unit used for downlink transmission.

When the first frequency unit includes an uplink frequency unit and a downlink frequency unit, that the first frequency unit and the second frequency unit are located in a same operating band may mean that the uplink frequency unit in the first frequency unit and the second frequency unit are located in the same operating band, or the downlink frequency unit in the first frequency unit and the second frequency unit are located in the same operating band, or the uplink frequency unit and the downlink frequency unit in the first frequency unit and the second frequency unit are all located in the same operating band.

When the first frequency unit includes an uplink frequency unit and a downlink frequency unit, and the second frequency unit includes a frequency unit used for uplink transmission and a frequency unit used for downlink transmission, that the first frequency unit and the second frequency unit are located in a same operating band may include at least one of the following examples.

Example 1: The uplink frequency unit in the first frequency unit and the frequency unit that is in the second frequency unit and that is used for the uplink transmission are located in the same operating band. Example 2: The downlink frequency unit in the first frequency unit and the frequency unit that is in the second frequency unit and that is used for the downlink transmission are located in the same operating band. Example 3: The uplink frequency unit in the first frequency unit and the frequency unit that is in the second frequency unit and that is used for the downlink transmission are located in the same operating band. Example 4: The downlink frequency unit in the first frequency unit and the frequency unit that is in the second frequency unit and that is used for the uplink transmission are located in the same operating band.

When that the first frequency unit and the second frequency unit are located in the same operating band includes at least three of Examples 1 to 4, it indicates that the uplink frequency unit and the downlink frequency unit in the first frequency unit, and the frequency unit used for the uplink transmission and the frequency unit used for the downlink transmission that are in the second frequency unit are all located in the same operating band.

Assuming that the communication method 400 is applied to an NR communication system, the operating band in which the first frequency unit and the second frequency unit are located may be, for example, an NR operating band in Table 1. For example, both the first frequency unit and the second frequency unit may be deployed in an operating band corresponding to n1.

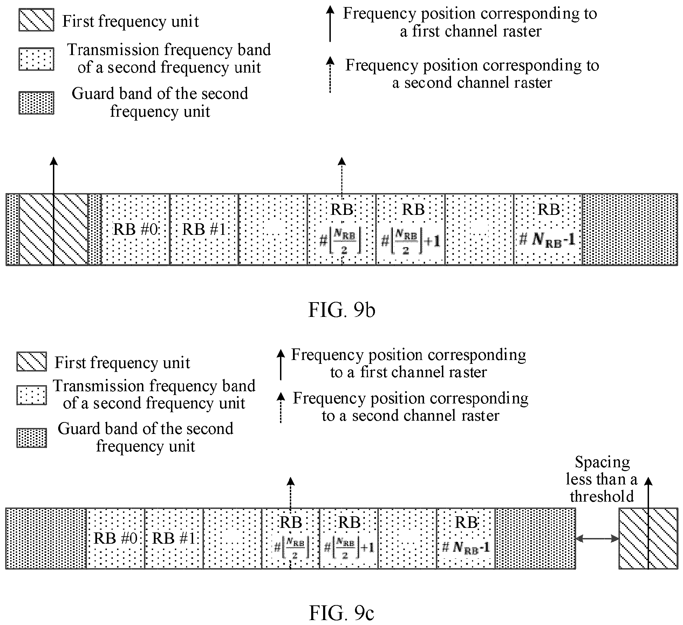

Optionally, the first frequency unit may have different deployment modes. Refer to FIG. 9a to FIG. 9c. The second frequency unit (for example, an NR carrier) includes a transmission bandwidth (for example, an NR transmission bandwidth) and a guard band (for example, an NR guard band). The transmission bandwidth of the second frequency unit includes $N_{RB}$ RBs, for example, an RB #0 to an RB #$N_{RB}$-1. For example, the first frequency unit may be deployed in the transmission bandwidth of the second frequency unit, and the first frequency unit may occupy one or more RBs in the second frequency unit. As shown in FIG. 9a, the first frequency unit occupies the RB #1 in the second frequency unit. Alternatively, the first frequency unit may be deployed in the guard band of the second frequency unit. Refer to FIG. 9b. Alternatively, a frequency domain spacing between the first frequency unit and the second frequency unit is less than a threshold. Refer to FIG. 9c. With reference to FIG. 9a to FIG. 9c, it can be learned that a resource element that is in the first frequency unit and that corresponds to the first channel raster in the first frequency unit may be a resource element in the first frequency unit, and an index of an RB in which the resource element is located may satisfy the formula

$$n'_{PRB} = \left\lfloor \frac{N'_{RB}}{2} \right\rfloor$$

in Table 5, where $N'_{RB}$ is a quantity of RBs included in a transmission bandwidth of the first frequency unit. A resource element that is in the second frequency unit and that corresponds to the second channel raster in the second frequency unit may be a resource element in the second frequency unit, and an index of an RB in which the

$$n_{PRB} = \left\lfloor \frac{N_{RB}}{2} \right\rfloor$$

resource element is located may satisfy the formula in Table 5.

For a relative position relationship between the first frequency unit and the second frequency unit that are deployed in frequency domain, a frequency domain resource relationship between the first frequency unit and the second frequency unit further includes the following three possible examples.

In a first example, when the first frequency unit is deployed in the transmission bandwidth of the second frequency unit, to avoid causing a resource fragment and reducing spectrum usage efficiency, a boundary of the RB of the first frequency unit needs to be aligned with a boundary of the RB of the second frequency unit.

In a second example, when the first frequency unit is deployed in the guard band of the second frequency unit, a boundary of a subcarrier of the first frequency unit may be aligned with a boundary of a subcarrier of the second frequency unit, to avoid interference caused to data transmission within the transmission bandwidth of the second frequency unit because the subcarriers are non-orthogonal. In this case, a frequency domain resource occupied by the first frequency unit does not overlap the transmission bandwidth of the second frequency unit, and spectrum usage efficiency of the second frequency unit is not affected if a boundary of the RB of the first frequency unit is not aligned with a boundary of the RB of the second frequency unit. Therefore, whether the boundary of the RB of the first frequency unit is aligned with the boundary of the RB of the second frequency unit may not be limited.

In a third example, when the frequency domain spacing between the first frequency unit and the second frequency unit is less than the threshold, similar to the second example, a boundary of a subcarrier of the first frequency unit may be aligned with a boundary of a subcarrier of the second frequency unit, and whether a boundary of the RB of the first frequency unit is aligned with a boundary of the RB of the second frequency unit is not limited.

Deployment modes of the first frequency unit in the second example and the third example may be referred to as deployment outside a transmission bandwidth below.

A frequency position at which the first channel raster in the first frequency unit is located corresponds to a frequency position of a resource element in the first frequency unit. An index of a position of the resource element in frequency domain may be determined by using the following two examples.

Example 1: The index of the position of the resource element in frequency domain may be determined based on the transmission bandwidth of the first frequency unit. As shown in Table 5, it is assumed that the transmission bandwidth of the first frequency unit includes $N'_{RB}$ RBs. When $N'_{RB}$ is an odd number (that is, $N'_{RB}$ mod 2=1), a resource

$$n'_{PRB} = \left\lfloor \frac{N'_{RB}}{2} \right\rfloor$$

element index is 6, and a physical resource block index is . When $N'_{RB}$ is an even number (that is,

$$n'_{PRB} = \left\lfloor \frac{N'_{RB}}{2} \right\rfloor$$

$N'_{RB}$ mod 2=0), the resource element index is 0, and the physical resource block index is . For example, in FIG. 9a, the frequency position corresponding to the first channel raster is that the physical resource block

$$n'_{PRB} = \left\lfloor \frac{1}{2} \right\rfloor = 0$$

index is , and the resource element index is 6.

Example 2: The index of the position of the resource element in frequency domain may be determined based on the transmission bandwidth $N_{RB}$ of the second frequency unit. As shown in Table 5, the transmission bandwidth of the first frequency unit includes $N_{RB}$ RBs. When $N_{RB}$ is an odd number (that is, $N_{RB}$ mod 2=1), a resource element index

$$n_{PRB} = \left\lfloor \frac{N_{RB}}{2} \right\rfloor$$

is 6, and a physical resource block index is . When $N'_{RB}$ is an even number (that is, $N_{RB}$ mod 2=0),

$$n_{PRB} = \left\lfloor \frac{N_{RB}}{2} \right\rfloor$$

the resource element index is 0, and the physical resource block index is .

It may be understood that Example 1 is applicable to a scenario in the first example, the second example, or the third example. To be specific, when the first frequency unit is deployed in the transmission bandwidth of the second frequency unit or the guard band of the second frequency unit, or the frequency domain spacing between the first frequency unit and the second frequency unit is less than the threshold, the first device may determine, based on the transmission bandwidth of the first frequency unit, a position of the resource element corresponding to the first channel raster, that is, determine the first frequency unit. The example 2 is generally applicable to a scenario in the first example. To be specific, when the first frequency unit is deployed in the transmission band of the second frequency unit, it may be considered that the first device determines, based on the transmission bandwidth of the second frequency unit, a position of the resource element corresponding to the first channel raster, that is, determines the first frequency unit. The following further describes scenarios in the first example, the second example, and the third example, manners of determining the first frequency unit in the first example and the second example, and a granularity of a channel raster, to make deployment of the first frequency unit more flexible while ensuring the spectrum usage efficiency and preventing the subcarriers from being non-orthogonal.

In this embodiment of this application, the granularity of the first channel raster corresponding to the first frequency unit may be the same as or different from the granularity of the channel raster corresponding to the second frequency unit. In this embodiment of this application, the granularity of the first channel raster is less than or equal to the granularity of the second channel raster, to avoid a case in which flexibility of deploying the first frequency unit is reduced because the granularity of the first channel raster is excessively large.

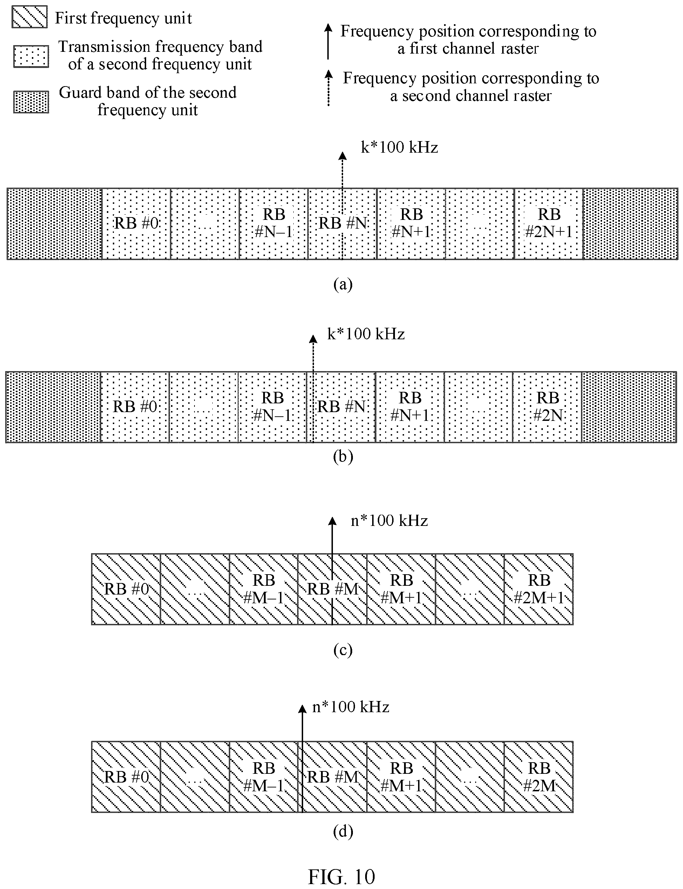

With reference to the first example and FIG. 10, the flexibility of deploying the first frequency unit is described based on a case in which the granularity of the first channel raster is the same as the granularity of the second channel raster.

As shown in FIG. 10, a quantity $N_{RB}$ of RBs occupied by the second frequency unit (for example, an NR carrier) may be an odd number, in other words, $N_{RB}$ *mod* 2 = 1. For example, the quantity $N_{RB}$ of RBs included in the transmission bandwidth of the second frequency unit in (a) equals to 2N+1. Alternatively, a quantity $N_{RB}$ of RBs occupied by the second frequency unit may be an even number, in other words, $N_{RB}$ *mod* 2 = 0. For example, the quantity $N_{RB}$ of RBs included in the transmission bandwidth of the second frequency unit in (b) equals to 2N. An arrow position is a frequency position of the second frequency unit, in other words, a frequency position of a resource element in the second frequency unit corresponding to a frequency position at which the second channel raster is located. For example, when the quantity $N_{RB}$ of RBs included in the transmission bandwidth of the second frequency unit equals to 2N+1, the frequency position at which the second channel raster is located corresponds to an RE #6 of an RB #N. For another example, when the quantity $N_{RB}$ of RBs included in the transmission bandwidth of the second frequency unit equals to 2N, the frequency position at which the second channel raster is located corresponds to an RE #0 of an RB #N.

As shown in FIG. 10, a quantity $N'_{RB}$ of RBs occupied by the first frequency unit may also be an odd number, in other words, $N'_{RB}$ *mod* 2 = 1. For example, the quantity $N'_{RB}$ of RBs included in the transmission bandwidth of the first frequency unit in (c) equals to 2M+1. Alternatively, a quantity $N'_{RB}$ of RBs occupied by the first frequency unit is an even number, in other words, $N'_{RB}$ *mod* 2 = 0. For example, the quantity $N'_{RB}$ of RBs included in the transmission bandwidth of the first frequency unit in (d) equals to 2M. An arrow position is a frequency position of the first frequency unit, in other words, a frequency position of a resource element in the first frequency unit corresponding to a frequency position at which the first channel raster is located. For example, when the quantity $N'_{RB}$ of RBs included in the transmission bandwidth of the first frequency unit equals to 2M+1, the frequency position at which the first channel raster is located corresponds to an RE #6 of an RB #M. For another example, when the quantity $N_{RB}$ of RBs included in the transmission bandwidth of the first frequency unit equals to 2M, the frequency position at which the first channel raster is located corresponds to an RE #0 of an RB #M.

Both M and N are positive integers. Generally, M is less than or equal to N.

As shown in (a), (b), (c) and (d) in FIG. 10, four scenarios about parities of quantities of RBs respectively occupied by the first frequency unit and the second frequency unit can be obtained. For example, a parity of $N_{RB}$ is consistent with a parity of $N'_{RB}$. For example, for the second frequency unit, refer to (a), and for the first frequency unit, refer to FIG. (c), or for the second frequency unit, refer to (b), and for the first frequency unit, refer to (d). Alternatively, a parity of $N_{RB}$ is inconsistent with a parity of $N'_{RB}$. For example, for the second frequency unit, refer to (a), and for the first frequency unit, refer to FIG. (d), or for the second frequency unit, refer to (b), and for the first frequency unit, refer to (c).

Based on the foregoing four scenarios, an example in which a subcarrier spacing is 15 kHz, both the first channel raster and the second channel raster are 100 kHz, and a bandwidth of an RB is 180 kHz is used. When it is ensured that the boundary of the RB of the first frequency unit is aligned with the boundary of the RB of the second frequency unit, possible values $f_p$ of a frequency corresponding to the first channel raster are shown in Table 6. k, n, and m are all integers, $k*100$ is a frequency corresponding to the second channel raster, and $m*180$ represents an integer multiple of the bandwidth of the RB.

**Table 6**

| $N_{RB}$ | $N'_{RB}$ | Frequency $f_p$ (kHz) corresponding to the first channel raster |
|---|---|---|
| $N_{RB}$ *mod* 2 = 1 | $N'_{RB}$ *mod* 2 = 1 | $f_p=k*100\pm m*180=n*100$ => m=0, $\pm5$, $\pm10$, $\pm15$, ... |
| $N_{RB}$ *mod* 2 = 1 | $N'_{RB}$ *mod* 2 = 0 | $f_p=k*100\pm(m*180+90)=n*100$ => m does not exist |
| $N_{RB}$ *mod* 2 = 0 | $N'_{RB}$ *mod* 2 = 0 | $f_p=k*100\pm m*180=n*100$ => m=0, $\pm5$, $\pm10$, $\pm15$, ... |
| $N_{RB}$ *mod* 2 = 0 | $N'_{RB}$ *mod* 2 = 1 | $f_p=k*100\pm(m*180+90)=n*100$ => m does not exist |

As shown in Table 6, it is assumed that within the transmission bandwidth of the second frequency unit, an index of a middle resource block (RB) is 0, an index of an RB whose frequency is higher than the RB is a positive value, and an index of an RB whose frequency is lower than the RB is a negative value. When a parity of the transmission bandwidth of the second frequency unit is consistent with a parity of the transmission bandwidth of the first frequency unit, only some limited RB positions in the second frequency unit may be used to deploy the first frequency unit. m represents an index of an RB. When the parity of $N_{RB}$ is consistent with the parity of $N'_{RB}$, m=0, $\pm5$, $\pm10$, $\pm15$, ..., which indicates that the middle RB within the transmission bandwidth of the second frequency unit may be used to deploy the first frequency unit, and positions at an interval of five RBs may be used to deploy the first frequency unit. When the parity of $N_{RB}$ is inconsistent with the parity of $N'_{RB}$, a frequency position that may be used to deploy the first frequency unit cannot be found in the NR carrier.

In some embodiments, according to the method provided in the example 2, the index of the position of the resource element in frequency domain may be determined based on the transmission bandwidth of the second frequency unit, to avoid a case in which the first frequency unit cannot be configured when the parity of the quantity of RBs included in the transmission bandwidth of the first frequency unit is inconsistent with the parity of the quantity of RBs included in the transmission bandwidth of the second frequency unit, in other words, to avoid a case in which when the parity of the quantity of RBs included in the transmission bandwidth of the first frequency unit is inconsistent with the parity of the quantity of RBs included in the transmission bandwidth of the second frequency unit, the boundary of the RB of the first frequency unit is not aligned with the boundary of the RB of the second frequency unit due to configuration of the first frequency unit.

However, with reference to Table 6, even if the parity of the quantity of RBs included in the transmission bandwidth of the first frequency unit is inconsistent with the parity of the quantity of RBs included in the transmission bandwidth of the second frequency unit, frequency positions that are in the second frequency unit and that may be used to configure the first frequency unit are quite limited. To further improve the flexibility of deploying the first frequency unit, in this embodiment, further reducing the granularity of the first channel raster is considered.

For example, with reference to Table 6, a value of m in the $f_p$ formula is set to 0, 1, 2, 3, ..., and a value of n is attempted to be set. A deviation between $k*100\pm m*180$ or $k*100\pm(m*180+90)$ and n*100 is calculated, to obtain the deviation being 0, $\pm10$, $\pm20$, $\pm30$, $\pm40$, or $\pm50$ (kHz). In this case, to deploy the first frequency unit at any RB position in the second frequency unit, the first channel raster may be set to 10 kHz.

It should be understood that, that the first channel raster is 10 kHz is merely an example, and does not constitute any limitation on this application. When the granularity of the first channel raster is less than the granularity of the second channel raster, a plurality of values of the granularity of the first channel raster all can improve the flexibility of deploying the first frequency unit. For example, the granularity of the first channel raster may alternatively be 5 kHz, 20 kHz, or the like.

For example, in the four scenarios combining each of (a) and (b) with each of (c) and (d) in FIG. 10, an example in which the subcarrier spacing is 30 kHz, both the first channel raster and the second channel raster are 100 kHz, and the bandwidth of the RB is 180 kHz is used. When it is ensured that the boundary of the RB of the first frequency unit is aligned with the boundary of the RB of the second frequency unit, possible values of the frequency corresponding to the first channel raster are shown in Table 7.

**Table 7**

| $N_{RB}$ | $N'_{RB}$ | Frequency $f_p$ (kHz) corresponding to the first channel raster |
|---|---|---|
| $N_{RB}\ mod\ 2 = 1$ | $N'_{RB}\ mod\ 2 = 1$ | $f_p=k*100\pm m*360=n*100 => m=0, \pm5, \pm10, \pm15, ...$ |
| $N_{RB}\ mod\ 2 = 1$ | $N'_{RB}\ mod\ 2 = 0$ | $f_p=k*100\pm(m*360\pm180)=n*100 => m=0, \pm2, \pm7, \pm12, ...$ |
| $N_{RB}\ mod\ 2 = 0$ | $N'_{RB}\ mod\ 2 = 0$ | $f_p=k*100\pm m*360=n*100 => m=0, \pm5, \pm10, \pm15, ...$ |
| $N_{RB}\ mod\ 2 = 0$ | $N'_{RB}\ mod\ 2 = 1$ | $f_p=k*100\pm(m*360\pm180)=n*100 => m=0, \pm2, \pm7, \pm12, ...$ |

With reference to Table 7, it can be further learned through analysis that deviations between the possible values of the frequency $f_p$ corresponding to the first channel raster and an integer multiple of 100 kHz are 0, $\pm20$, and $\pm40$ (kHz). To deploy the first frequency unit at any RB position in the second frequency unit, the granularity of the first channel raster may be set to 20 kHz. Certainly, the first channel raster may alternatively be set to 10 kHz or 5 kHz.

When the subcarrier spacing is 60 kHz, the deviations between the possible values of the frequency $f_p$ corresponding to the first channel raster and the integer multiple of 100 kHz are the same as those obtained when the subcarrier spacing is 30 kHz. In other words, when the subcarrier spacing is 60 kHz, the granularity of the first channel raster may also be 5 kHz, 10 kHz, or 20 kHz.

In some embodiments, the parity of the quantity of RBs included in the transmission bandwidth of the first frequency unit is consistent with the parity of the quantity of RBs included in the transmission bandwidth of the second frequency unit. For example, the first device may determine, based on the parity of the quantity of RBs included in the transmission bandwidth of the second frequency unit, the quantity of RBs included in the transmission bandwidth of the first frequency unit, so that the parity of the quantity of RBs included in the transmission bandwidth of the first frequency unit is consistent with the parity of the quantity of RBs included in the transmission bandwidth of the second frequency unit. In this way, the flexibility of deploying the first frequency unit is improved.

In examples related to FIG. 10 and Table 6, the scenario in the first example, to be specific, the first frequency unit is deployed in the transmission bandwidth of the second frequency unit, is mainly used as an example for description. The following uses the scenario in the second example or the third example, to be specific, the first frequency unit is deployed in the guard band of the second frequency unit, or the frequency domain spacing between the first frequency unit and the second frequency unit is less than the threshold, as an example for description.

As described above, when the first frequency unit is deployed in the guard band of the second frequency unit, or the frequency domain spacing between the first frequency unit and the second frequency unit is less than the threshold, the boundary of the subcarrier of the first frequency unit is aligned with the boundary of the subcarrier of the second frequency unit, to avoid interference caused to the data transmission within the transmission bandwidth of the second frequency unit because the first frequency unit and the second frequency unit are not orthogonal.

It is assumed that both the granularity of the first channel raster and the granularity of the second channel raster are 100 kHz, and a subcarrier spacing is 15 kHz. The following analyzes, with reference to Table 8, an available frequency position that meets a condition that a channel raster is an integer multiple of 100 kHz.

**Table 8**

| Transmission bandwidth (MHz) of the second frequency unit | Quantity of RBs included in the transmission bandwidth of the second frequency unit | Boundary (kHz) of the transmission bandwidth of the second frequency unit | Transmission bandwidth of the first frequency unit | Frequency $f_p$ (kHz) corresponding to the first channel raster |
|---|---|---|---|---|
| 5 | 25 | $\pm 2250$ | Odd number | $f_p = \pm 2340, \pm 2355, \pm 2370, \pm 2385$ (kHz) |
| 5 | 25 | $\pm 2250$ | Even number | $f_p = \pm 2250$ (kHz) |
| 10 | 52 | $\pm 4680$ | Odd number | $f_p = \pm 4770, \pm 4785, \pm 4800, \pm 4815, \pm 4830, \pm 4845, \pm 4860, \pm 4875, \pm 4890, \pm 4905$ (kHz) |
| 10 | 52 | $\pm 4680$ | Even number | $f_p = \pm 4680$ (kHz) |

Table 8 shows an analysis result only by using examples in which the transmission bandwidth of the NR carrier is 5 MHz and 10 MHz. It is assumed that within the transmission bandwidth of the second frequency unit, a frequency corresponding to an RB at a middle RB position is 0 Hz, a frequency of an RB whose frequency is higher than the RB is a positive value, and a frequency of an RB whose frequency is lower than the RB is a negative value. It can be learned from Table 8 that a quantity of values of $f_p$ that meets the integer multiple of 100 kHz is quite limited. For example, the first frequency unit may be deployed on $f_p = \pm 4800$ (kHz) only when the transmission bandwidth of the second frequency unit is 5 MHz and the quantity of RBs included in the transmission bandwidth of the first frequency domain unit is an even number, When the transmission bandwidth of the second frequency unit is another value, each possible position of $f_p$ may be calculated by using a similar method. Due to a limitation of length, examples are not described one by one herein. In a similar manner, a conclusion is obtained that when the transmission bandwidth of the second frequency unit is the another value, frequency positions that meet the condition that $f_p$ is the integer multiple of 100 kHz are also quite limited, in other words, positions at which the first frequency unit may be deployed are quite limited.

Further analysis shows that, for possible values that are of the frequency $f_p$ corresponding to the first channel raster and that are shown in Table 8 and that are not shown in Table 8 but are obtained through calculation in the similar manner, deviations between the frequency $f_p$ corresponding to the first channel raster and the integer multiple of 100 kHz are 0, $\pm 5$, $\pm 10$, $\pm 15$, $\pm 20$, $\pm 25$, $\pm 30$, $\pm 35$, $\pm 40$, $\pm 45$, and $\pm 50$ (kHz). To deploy the first frequency unit at any position in the guard band of the second frequency unit, the granularity of the first channel raster may be 5 kHz. In Table 9, that the second frequency unit is an NR carrier is used as a possible example. Due to a limitation of length, only operating bands n1, n2, n3, and n5 are listed in the table. It should be understood that, for another operating band whose granularity of the second channel raster (for example, an NR channel raster) is 100 kHz, that the granularity of the first channel raster is 5 kHz is also applicable.

**Table 9**

| | Second frequency unit | | | First frequency unit | | |
|---|---|---|---|---|---|---|
| NR operating band | Second channel raster (kHz) | Uplink transmission $N_{REF}$ range (Start - <Step size> - End) | Downlink transmission $N_{REF}$ range (Start - <Step size> - End) | First channel raster (kHz) | Uplink transmission $N_{REF}$ range (Start - <Step size> - End) | Downlink transmission $N_{REF}$ range (Start - <Step size> - End) |
| n1 | 100 | 384000 - <20> - 396000 | 422000 - <20> - 434000 | 5 | 384000 - <1> - 396000 | 422000 - <1> - 434000 |

(continued)

| | Second frequency unit | | | First frequency unit | | |
|---|---|---|---|---|---|---|
| NR operating band | Second channel raster (kHz) | Uplink transmission $N_{REF}$ range (Start - <Step size> - End) | Downlink transmission $N_{REF}$ range (Start - <Step size> - End) | First channel raster (kHz) | Uplink transmission $N_{REF}$ range (Start - <Step size> - End) | Downlink transmission $N_{REF}$ range (Start - <Step size> - End) |
| n2 | 100 | 370000 - <20> - 382000 | 386000 - <20> - 398000 | 5 | 370000 - <1> - 382000 | 386000 - <1> - 398000 |
| n3 | 100 | 342000 - <20> - 357000 | 361000 - <20> - 376000 | 5 | 342000 - <1> - 357000 | 361000 - <1> - 376000 |
| n5 | 100 | 164800 - <20> - 169800 | 173800 - <20> - 178800 | 5 | 164800 - <1> - 169800 | 173800 - <1> - 178800 |

Based on a reason similar to the foregoing one, when the subcarrier is 30 kHz, the deviations between the frequency $f_p$ corresponding to the first channel raster and the integer multiple of 100 kHz are 0, ±10, ±20, ±30, ±40, and ±50 (kHz). In this case, the granularity of the first channel raster may be 10 kHz, or certainly may be 5 kHz. When the subcarrier spacing is 60 kHz, the deviations between the frequency $f_p$ corresponding to the first channel raster and the integer multiple of 100 kHz are 0, ±20, and ±40 (kHz). In this case, the granularity of the first channel raster may be 20 kHz, or certainly may be 5 kHz or 10 kHz.

Based on Table 6 to Table 9 and related examples, the granularity of the first channel raster is related to at least one of the deployment mode of the first frequency unit and the subcarrier spacing of the first frequency unit. Based on this, the first device may determine the granularity of the first channel raster based on the at least one of the deployment mode of the first frequency unit and the subcarrier spacing of the first frequency unit.

It needs to be noted that the subcarrier spacing of the first frequency unit may be a subcarrier spacing agreed on by the first frequency unit, or a subcarrier spacing configured in the first frequency unit.

For example, a correspondence between the channel raster of the first frequency unit and the subcarrier spacing of the first frequency unit may include:

(1) the subcarrier spacing is 15 kHz, and the channel raster is 5 kHz;
(2) the subcarrier spacing is 30 kHz, and the channel raster is 10 kHz; and
(3) the subcarrier spacing is 60 kHz, and the channel raster is 20 kHz.

For another example, a correspondence between the channel raster of the first frequency unit, the subcarrier spacing of the first frequency unit, and the deployment mode of the first frequency unit may include:

(1) the subcarrier spacing is 15 kHz, deployment is within a transmission bandwidth, and the channel raster is 10 kHz;
(2) the subcarrier spacing is 15 kHz, deployment is outside a transmission bandwidth, and the channel raster is 5 kHz;
(3) the subcarrier spacing is 30 kHz, deployment is within a transmission bandwidth, and the channel raster is 20 kHz;
(4) the subcarrier spacing is 30 kHz, deployment is outside a transmission bandwidth, and the channel raster is 10 kHz;
(5) the subcarrier spacing is 60 kHz, deployment is within a transmission bandwidth, and the channel raster is 20 kHz; and
(6) the subcarrier spacing is 60 kHz, deployment is outside a transmission bandwidth, and the channel raster is 20 kHz.

The correspondence may be predefined or preconfigured. The first device may determine the granularity of the first channel raster based on the correspondence. Alternatively, the granularity of the first channel raster may be a predefined value, for example, an integer multiple of 5 kHz, 10 kHz, or 20 kHz.

In some embodiments, the radio frequency reference frequency $F_{REF}$ corresponding to the first frequency unit satisfies: $F_{REF} = F_{REF-Offs} + \Delta F_{Global}(N_{REF} - N_{REF-Offs}) + offset$. $F_{REF-Offs}$ is a radio frequency reference frequency offset value, $\Delta F_{Global}$ is a granularity of a global channel raster, $N_{REF}$ is an NR-ARFCN, $N_{REF-Offs}$ is an NR-ARFCN offset value, and offset is a frequency offset.

For values of $F_{REF-Off}$, and $N_{REF-Offs}$, refer to Table 10.

**Table 10**

| Frequency range (MHz) | $\Delta F_{Global}$ (kHz) | $F_{REF\text{-}Offs}$ (MHz) | $N_{REF\text{-}Offs}$ | $N_{REF}$ range |
|---|---|---|---|---|
| 0 to 3000 | 5 | 0 | 0 | 0 to 599999 |
| 3000 to 24250 | 15 | 3000 | 600000 | 600000 to 2016666 |

For example, a value of offset is one of {-50, -45, -40, -35, -30, -25, -20, -15, -10, -5, 0, 5, 10, 15, 20, 25, 30, 35, 40, 45, 50} kHz.

For example, for the first device, the first frequency unit may be determined by the first device, or the first frequency unit is obtained by the first device from second configuration information received by a fourth device. For the second device, the first frequency unit may be determined by the second device, or the first frequency unit may be obtained by the second device from the first configuration information sent by the first device. Optionally, the fourth device may be a network device, for example, a base station or a macro base station.

Therefore, in this embodiment of this application, when communicating with different devices, the first device determines the first frequency unit used for the communication between the first device and the second device. The first frequency unit and the second frequency unit that is used for communication between the first device and the third device are located in the same operating band, and the granularity of the first channel raster corresponding to the first frequency unit is less than or equal to the granularity of the second channel raster Embodiments of this application provide a solution for determining the frequency unit, so that the first device can communicate with the second device via the first frequency unit. In addition, when the frequency unit is determined, a granularity of a channel raster is considered, for example, the granularity of the first channel raster corresponding to the first frequency unit is set to a smaller value, to improve the flexibility of deploying the first frequency unit.

In some communication systems (for example, an LTE system), to reduce a problem that performance of a direct current (direct current, DC) subcarrier deteriorates due to local oscillator feedthrough on a network device side or a terminal device side, one DC subcarrier is reserved in a downlink frequency unit and is not used to send information, and an uplink carrier is wholly offset by half a subcarrier (for example, 7.5 kHz). In some other communication systems (for example, an NR system), a problem that performance of a DC subcarrier deteriorates due to local oscillator feedthrough is processed via a network device or a terminal device, but no DC subcarrier is reserved in a downlink carrier, and an uplink carrier is not wholly offset by half a subcarrier. When the foregoing two communication systems (for example, the LTE system and the NR system) share a spectrum resource, downlink frequency units in the two communication systems are not offset, and therefore boundaries of subcarriers are aligned. However, in the two communication systems, an uplink frequency unit in one communication system is offset by half a subcarrier, and an uplink frequency unit in the other communication system is not offset, resulting in mutual interference between the communication systems during data transmission because the boundaries of the subcarriers of the two communication systems are not aligned (that is, the subcarriers are not orthogonal).

The following uses examples to describe how to determine the first frequency unit in the shared spectrum.

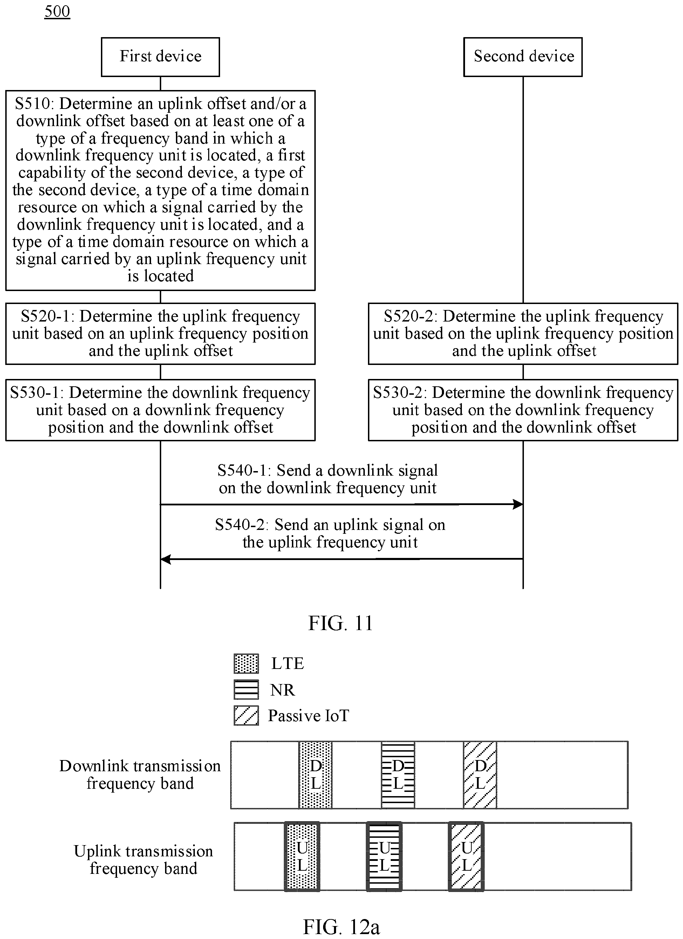

FIG. 11 is an interaction flowchart of a communication method 500 according to an embodiment of this application. As shown in FIG. 11, the communication method 500 further includes some or all of the following steps.

S510: A first device determines an uplink offset and/or a downlink offset based on at least one of a type of a frequency band in which a downlink frequency unit is located, a first capability of a second device, a type of the second device, a type of a time domain resource on which a signal carried by the downlink frequency unit is located, and a type of a time domain resource on which a signal carried by an uplink frequency unit is located.

S520-1: The first device determines the uplink frequency unit based on an uplink frequency position and the uplink offset.

S520-2: The second device determines the uplink frequency unit based on the uplink frequency position and the uplink offset.

S530-1: The first device determines the downlink frequency unit based on a downlink frequency position and the downlink offset.

S530-2: The second device determines the downlink frequency unit based on the downlink frequency position and the downlink offset.

S540-1: The first device sends a downlink signal to the second device on the downlink frequency unit. Correspondingly, the second device receives the downlink signal from the first device on the downlink frequency unit.

S540-2: The second device sends an uplink signal to the first device on the uplink frequency unit. Correspondingly, the first device receives the uplink signal from the second device on the uplink frequency unit.

Execution of S520-1, S520-2, S530-1, and S530-2 is not subject to a specific sequence in this embodiment.

Either S540-1 or S540-2 may be performed, or S540-1 and S540-2 may be performed sequentially. For example, after receiving the downlink signal sent by the first device, the second device sends the uplink signal to the first device.

As described above, the first frequency unit may include the uplink frequency unit used for transmitting the uplink signal, and/or the downlink frequency unit used for transmitting the downlink signal. In this case, in S410-1 in the embodiment shown in FIG. 8, that a first device determines a first frequency unit may include: S520-1: The first device determines the uplink frequency unit based on an uplink frequency position and the uplink offset, and/or S530-1: The first device determines the downlink frequency unit based on a downlink frequency position and the downlink offset.

The uplink frequency position may be agreed on in a protocol, or predefined by the first device, or preconfigured by the fourth device for the first device. This is not limited in this application. The downlink frequency position is similar to this, and details are not described again. In passive IoT, there is usually a frequency domain spacing between the uplink frequency position and the downlink frequency position. The frequency domain spacing may also be agreed on in a protocol, or predefined by the first device, or preconfigured by the fourth device for the first device.

Based on this, in this embodiment of this application, the first device may first determine the uplink offset and/or the downlink offset based on S510, so that the first device determines the first frequency unit based on the uplink offset/the downlink offset, to avoid interference caused to data transmission because boundaries of subcarriers are not aligned between communication systems in a shared spectrum.

The type of the frequency band in which the downlink frequency unit is located may include, for example, an uplink transmission frequency band in an FDD mode, a downlink transmission frequency band in an FDD mode, an SDL transmission frequency band, an SUL transmission frequency band, and a TDD transmission frequency band. In the following, the uplink transmission frequency band in the FDD mode and the SUL transmission frequency band are collectively referred to as an uplink transmission frequency band, and the downlink transmission frequency band in the FDD mode and the SDL transmission frequency band are collectively referred to as a downlink transmission frequency band.

The first capability indicates whether the second device supports a frequency shift of the uplink signal to an uplink transmission frequency band other than the downlink transmission frequency band in which the downlink frequency unit is located.

For example, in a passive IoT scenario, the second device may be a tag. The type of the second device may include an active tag and a passive tag. In some examples, the type of the second device may reflect the first capability. For example, when the type of the second device is the passive tag, the second device does not have a capability of performing the frequency shift of the uplink signal to the uplink transmission frequency band other than the downlink transmission frequency band in which the downlink frequency unit is located.

The type of the time domain resource may include, for example, an uplink time domain resource (for example, an uplink slot) and a downlink time domain resource (for example, a downlink slot) in a TDD mode.

The following describes S510 by using several examples.

    1. The first device determines the uplink offset and/or the downlink offset based on at least one of the type of the frequency band in which the downlink frequency unit is located and the first capability (or the type of the second device) of the second device.

In an example, when the downlink frequency unit is located in the downlink transmission frequency band, and the second device supports the frequency shift of the uplink signal to the uplink transmission frequency band other than the downlink transmission frequency band, the uplink offset is a first value or a second value. Alternatively, when the downlink frequency unit is located in the downlink transmission frequency band, and the second device does not support the frequency shift of the uplink signal to the uplink transmission frequency band other than the downlink transmission frequency band, the uplink offset is a first value.

It needs to be noted that whether the second device supports the frequency shift of the uplink signal to the uplink transmission frequency band other than the downlink transmission frequency band may be indicated by the first capability of the second device, or may be determined by the type of the second device.

As described above, the downlink transmission frequency band may be the downlink transmission frequency band in the FDD mode or the SDL transmission frequency band, and the uplink transmission frequency band may be the uplink transmission frequency band in the FDD mode and the SUL transmission frequency band.

It should be understood that when the downlink transmission frequency band is the downlink transmission frequency band in the FDD mode, and the uplink transmission frequency band is the uplink transmission frequency band in the FDD mode, the downlink transmission frequency band and the uplink transmission frequency band are located in a same operating band. For example, as shown in Table 1, the uplink transmission frequency band is an uplink operating band in the NR operating band n1, and the downlink transmission frequency band is a downlink operating band in the NR operating band n1. The NR operating band n1 is merely an example, and may be replaced with an operating band corresponding to any FDD mode in Table 1, for example, n2, n3, ....

Certainly, the downlink transmission frequency band and the uplink transmission frequency band may not be transmission frequency bands in pairs, or the uplink transmission frequency band and the downlink transmission frequency band may be located in different operating bands, or frequency band numbers (for example, n1, n2, n3, ...) of the uplink transmission frequency band and the downlink transmission frequency band are different. For example, the downlink transmission frequency band is the downlink transmission frequency band in the FDD mode, and the uplink transmission frequency band is the SUL transmission frequency band. For another example, the downlink transmission frequency band is a downlink operating band in the NR operating band n1, and the uplink transmission frequency band is an uplink operating band in the NR operating band n2.

Further, the uplink transmission frequency band may be, for example, a spectrum shared with LTE. In this case, when the uplink transmission frequency band is used for LTE uplink communication, to ensure that a boundary of a subcarrier of the uplink frequency unit is aligned with a boundary of a subcarrier of a frequency unit of LTE, the uplink offset is set to the second value, where the second value may be, for example, 7.5 kHz. When the uplink transmission frequency band is not used for LTE uplink communication, the uplink offset is the first value, where the first value may be, for example, 0.

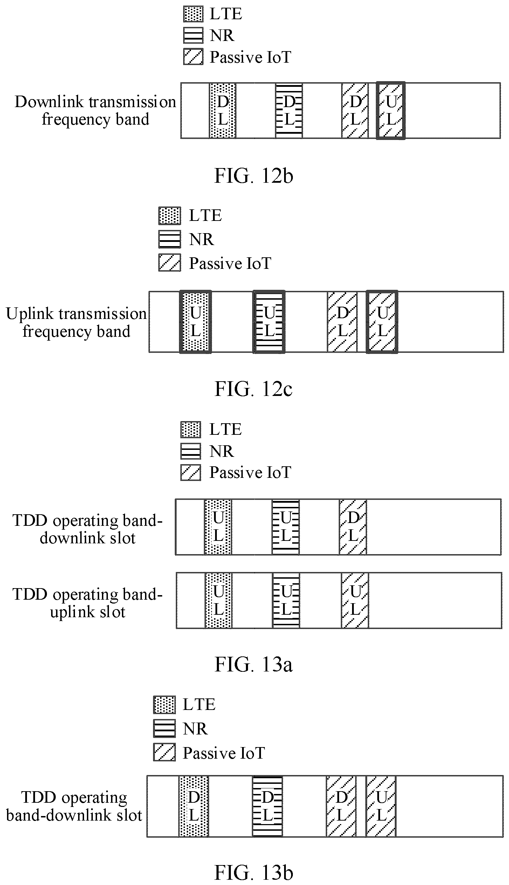

For example, it is assumed that the second frequency unit includes an NR uplink carrier for transmitting an NR uplink signal and/or an NR downlink carrier for transmitting an NR downlink signal, the first frequency unit includes a passive IoT uplink carrier for transmitting a passive IoT uplink signal and/or a passive IoT downlink carrier for transmitting a passive IoT downlink signal, and the first frequency unit is located in a shared spectrum of NR and LTE. The foregoing example is described with reference to FIG. 12a and FIG. 12b.

Refer to FIG. 12a. The passive IoT downlink carrier is located in a downlink transmission frequency band, and the second device supports a frequency shift of the passive IoT uplink signal to an uplink transmission frequency band corresponding to the downlink transmission frequency band in which the passive IoT downlink carrier is located. In this case, both the passive IoT uplink carrier and an LTE uplink carrier are located in the uplink transmission frequency band. Therefore, an uplink offset of the passive IoT uplink carrier is 7.5 kHz. Certainly, if it is determined that the uplink transmission frequency band is not used for LTE uplink communication, the uplink offset may be 0. Optionally, the NR uplink carrier is similar to the passive IoT uplink carrier, and an uplink offset of the NR uplink carrier is the same as the uplink offset of the passive IoT uplink carrier.

Refer to FIG. 12b. The passive IoT downlink carrier is located in a downlink transmission frequency band, and the second device does not support a frequency shift of the passive IoT uplink signal to an uplink transmission frequency band other than the downlink transmission frequency band in which the passive IoT downlink carrier is located. In this case, if the passive IoT uplink carrier is still located in the downlink transmission frequency band, and the downlink transmission frequency band is not used for LTE uplink communication, an uplink offset of the passive IoT uplink carrier is 0.

In the foregoing example, the downlink frequency unit is located in the downlink transmission frequency band, and the downlink transmission frequency band is not used for the LTE uplink communication. Therefore, the downlink offset may be 0.

In another example, when the downlink frequency unit is located in the uplink transmission frequency band, both the downlink offset and the uplink offset are a first value or a second value.

Further, the uplink transmission frequency band may be, for example, a spectrum shared with LTE. In this case, when the uplink transmission frequency band is used for LTE uplink communication, to ensure that boundaries of subcarriers of the downlink frequency unit and the uplink frequency unit are aligned with a boundary of a subcarrier of a frequency unit of LTE, both the downlink offset and the uplink offset are set to the second value, where the second value may be, for example, 7.5 kHz. When the uplink transmission frequency band is not used for LTE uplink communication, both the downlink offset and the uplink offset are set to the first value, where the first value may be, for example, 0.

For example, it is still assumed that the second frequency unit includes an NR uplink carrier for transmitting an NR uplink signal and/or an NR downlink carrier for transmitting an NR downlink signal, the first frequency unit includes a passive IoT uplink carrier for transmitting a passive IoT uplink signal and/or a passive IoT downlink carrier for transmitting a passive IoT downlink signal, and the first frequency unit is located in a shared spectrum of NR and LTE. The foregoing example is described with reference to FIG. 12c.

Refer to FIG. 12c. The passive IoT uplink carrier is located in a downlink transmission frequency band. In this case, the passive IoT downlink carrier, the passive IoT uplink carrier, and an LTE uplink carrier all are located in the uplink transmission frequency band. Therefore, both a downlink offset of the passive IoT downlink carrier and an uplink offset of the passive IoT uplink carrier are 7.5 kHz. Certainly, if it is determined that the uplink transmission frequency band is not used for LTE uplink communication, both the downlink offset and the uplink offset may be 0. Optionally, the NR downlink carrier is located in a downlink transmission frequency band. Therefore, a downlink offset of the NR downlink carrier may be 0. The NR uplink carrier is similar to the passive IoT uplink carrier, and an uplink offset of the NR uplink carrier is the same as the uplink offset of the passive IoT uplink carrier.

2. When the first frequency unit is located in a TDD operating band, the first device determines the uplink offset and the downlink offset based on the type of the time domain resource on which the signal carried by the downlink frequency unit is located and the type of the time domain resource on which the signal carried by the uplink frequency unit is located.

Example 1: When the downlink signal carried by the downlink frequency unit occupies a downlink time domain resource, and the uplink signal carried by the uplink frequency unit occupies an uplink time domain resource, both the downlink offset and the uplink offset are a first value or a second value. For example, it is assumed that the second frequency unit includes an NR uplink carrier for transmitting an NR uplink signal and/or an NR downlink carrier for transmitting an NR downlink signal, the first frequency unit includes a passive IoT uplink carrier for transmitting a passive IoT uplink signal and/or a passive IoT downlink carrier for transmitting a passive IoT downlink signal, and the first frequency unit is located in a shared spectrum of NR and LTE. With reference to FIG. 13a, the passive IoT downlink signal is transmitted in a downlink slot, and the passive IoT uplink signal is transmitted in an uplink slot. In this case, both the passive IoT uplink signal and an LTE uplink signal are transmitted in the uplink slot. Therefore, both an uplink offset of the passive IoT uplink carrier and a downlink offset of the passive IoT downlink carrier are 7.5 kHz. Certainly, if it is determined that the uplink slot is not used for LTE uplink communication, both the uplink offset and the downlink offset may be 0. Optionally, the NR uplink carrier is similar to the passive IoT uplink carrier, and an uplink offset of the NR uplink carrier is the same as the uplink offset of the passive IoT uplink carrier.

Example 2: When both the downlink signal carried by the downlink frequency unit and the uplink signal carried by the downlink frequency unit occupy a downlink time domain resource, both the downlink offset and the uplink offset are a first value. It is still assumed that the second frequency unit includes an NR uplink carrier for transmitting an NR uplink signal and/or an NR downlink carrier for transmitting an NR downlink signal, the first frequency unit includes a passive IoT uplink carrier for transmitting a passive IoT uplink signal and/or a passive IoT downlink carrier for transmitting a passive IoT downlink signal, and the first frequency unit is located in a shared spectrum of NR and LTE. With reference to FIG. 13b, both the passive IoT downlink signal and the passive IoT uplink signal are transmitted in a downlink slot, and the downlink slot is not used for LTE uplink communication. Therefore, both an uplink offset of the passive IoT uplink carrier and a downlink offset of the passive IoT downlink carrier are 0.

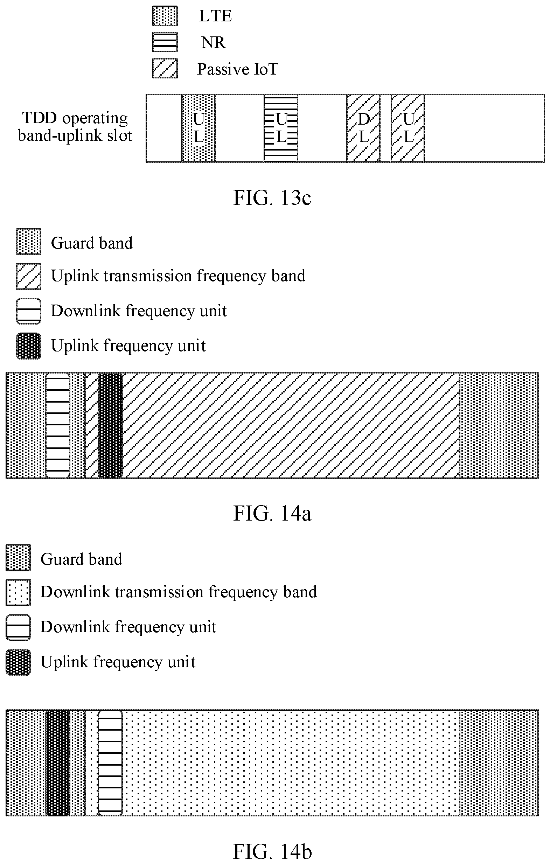

Example 3: When both the downlink signal carried by the downlink frequency unit and the uplink signal carried by the uplink frequency unit occupy an uplink time domain resource, both the downlink offset and the uplink offset are a first value or a second value. It is still assumed that the second frequency unit includes an NR uplink carrier for transmitting an NR uplink signal and/or an NR downlink carrier for transmitting an NR downlink signal, the first frequency unit includes a passive IoT uplink carrier for transmitting a passive IoT uplink signal and/or a passive IoT downlink carrier for transmitting a passive IoT downlink signal, and the first frequency unit is located in a shared spectrum of NR and LTE. With reference to FIG. 13c, both the passive IoT downlink signal and the passive IoT uplink signal are transmitted in an uplink slot. In this case, both the passive IoT uplink signal and an LTE uplink signal are transmitted in the uplink slot. Therefore, both an uplink offset of the passive IoT uplink carrier and a downlink offset of the passive IoT downlink carrier are 7.5 kHz. If it is determined that the uplink slot is not used for LTE uplink communication, both the uplink offset and the downlink offset may be 0. Optionally, the NR uplink carrier is similar to the passive IoT uplink carrier, and an uplink offset of the NR uplink carrier is the same as the uplink offset of the passive IoT uplink carrier.

Optionally, in any one of the foregoing examples, in the passive IoT scenario, the downlink signal carried by the downlink frequency unit may be a carrier signal or downlink signaling/data.

It may be understood that the uplink offset of the uplink frequency unit may be an offset of an RF reference frequency ($F_{RER}$) corresponding to the uplink frequency unit. Similarly, the downlink offset of the downlink frequency unit may be an offset of an RF reference frequency corresponding to the downlink frequency unit.

For example, the first device may determine the downlink frequency unit based on the downlink frequency position and the downlink offset. For example, the first device determines the downlink frequency unit based on a sum of the downlink frequency position and the downlink offset. The uplink offset may be a positive value or a negative value.

For example, the first device may determine the uplink frequency unit based on the uplink frequency position and the uplink offset. For example, the first device determines the uplink frequency unit based on a sum of the uplink frequency position and the uplink offset. Alternatively, the first device may determine the uplink frequency unit based on the downlink frequency position, the uplink offset, and the frequency domain spacing between the uplink frequency position and the downlink frequency position. For example, the first device determines the uplink frequency unit based on a sum of the downlink frequency domain position, the uplink offset, and the frequency domain spacing between the uplink frequency position and the downlink frequency position. The uplink offset may be a positive value or a negative value, and the frequency domain spacing between the uplink frequency position and the downlink frequency position may be a positive value or a negative value.

For the downlink frequency position, the downlink offset, the uplink frequency position, the uplink offset, and the frequency domain spacing between the uplink frequency position and the downlink frequency position, each piece of frequency information may be determined by the first device, or may be configured by the fourth device for the first device, or may be defined in a protocol, so that the first device can determine the first frequency unit based on some or all pieces of frequency information.

Optionally, the fourth device may send second configuration information to the first device. The second configuration information indicates at least one of the following: the downlink frequency position, the downlink offset, the uplink frequency position, the uplink offset, and the frequency domain spacing between the uplink frequency position and the downlink frequency position.

For example, the first device may be implemented as a base station, and the fourth device may be implemented as a macro base station, or the first device may be implemented as a terminal device, and the fourth device may be implemented as a base station.

The second device may receive first configuration information sent by the first device. The second device may determine the first frequency unit based on the first configuration information.

In some embodiments, the first configuration information may indicate the downlink frequency unit. The second device may receive the downlink signal from the first device on the downlink frequency unit.

In some other embodiments, the first configuration information may indicate the frequency domain spacing between the downlink frequency position and the uplink frequency position, the downlink frequency unit, and the uplink offset. The second device may determine the uplink frequency unit based on the frequency domain spacing between the downlink frequency position and the uplink frequency position, the downlink frequency unit, and the uplink offset. For example, the second device may determine the uplink frequency unit based on a sum of the frequency domain spacing between the downlink frequency position and the uplink frequency position, the downlink frequency unit, and the uplink offset.

In some other embodiments, the first configuration information may indicate the uplink frequency unit. The second device may send the uplink signal to the first device on the uplink frequency unit.

It needs to be noted that some or all pieces of frequency information of the downlink frequency unit, the uplink frequency unit, the frequency domain spacing between the downlink frequency position and the uplink frequency position, the downlink frequency unit, and the uplink offset may also be defined in a protocol, or may be predefined by the second device. In this case, the first configuration information may not include the some or all pieces of frequency information defined in the protocol and predefined by the second device.

In the embodiment shown in FIG. 11, the first device determines the first frequency unit based on the uplink offset and/or the downlink offset, to avoid mutual interference caused to data transmission between communication systems because a boundary of a subcarrier of the first frequency unit is not aligned with a boundary of a subcarrier of another communication system (for example, an LTE system) (that is, the subcarriers are not orthogonal).

As described above, in a passive IoT communication scenario, in an aspect, because backscatter communication is used for uplink transmission of the passive IoT, in other words, the second device receives a downlink carrier signal when sending an uplink backscattered signal. In this case, an uplink sending signal and the downlink carrier signal overlap in time domain, so that both the uplink sending signal and the downlink carrier signal may be located in an uplink time domain resource of a TDD transmission frequency band or located in a downlink time domain resource of a TDD transmission frequency point. In a second aspect, a capability of performing, by the second device, a frequency shift on the uplink backscattered signal relative to the downlink carrier signal is limited. In other words, when the capability of performing the frequency shift by the second device is poor, both the uplink frequency unit carrying the uplink signal and the downlink frequency unit carrying the downlink signal may be located in an uplink transmission frequency band or located in a downlink transmission frequency band. In the foregoing two aspects, there may be a problem of signal interference caused by different directions of receiving and sending between the passive IoT and NR.

For the foregoing problem, in this embodiment, it is considered that a frequency unit whose transmission direction is different from that of the second frequency unit is deployed in a guard band, to avoid a problem that directions of receiving and sending between the first frequency unit and the second frequency unit are different. Refer to FIG. 14a to FIG. 14d.

Refer to FIG. 14a. The second frequency unit is a frequency unit used for uplink transmission, in other words, the second frequency unit is located in an uplink transmission frequency band. In this case, a direction of an uplink frequency unit in the first frequency unit is the same as a direction of the second frequency unit. The uplink frequency unit may be located in a transmission bandwidth of the second frequency unit, and a downlink frequency unit in the first frequency unit is located in the guard band of the second frequency unit because a direction of the downlink frequency unit is different from the direction of the second frequency unit.

Refer to FIG. 14b. The second frequency unit is a frequency unit used for downlink transmission. In other words, the second frequency unit is located in a downlink transmission frequency band. Because a direction of an uplink frequency unit in the first frequency unit is different from a direction of the second frequency unit, the uplink frequency unit may be located in the guard band of the second frequency unit. Because a direction of a downlink frequency unit in the first frequency unit is the same as the direction of the second frequency unit, the downlink frequency unit may be located in a transmission bandwidth of the second frequency unit.

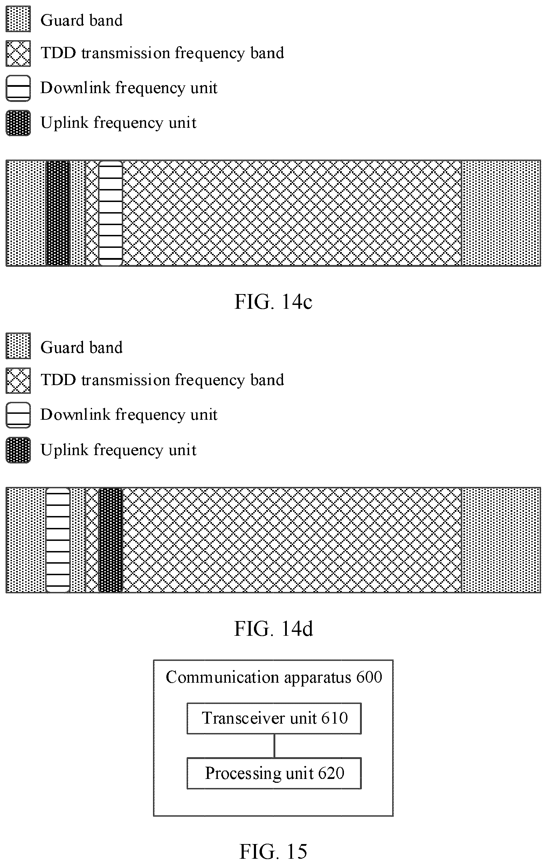

Refer to FIG. 14c. When the first frequency unit is located in a TDD operating band, and both a downlink signal transmitted on a downlink frequency unit and an uplink signal that is transmitted on an uplink frequency unit and that corresponds to the downlink signal occupy a downlink time domain resource, the downlink frequency unit is located in a transmission bandwidth of the second frequency unit, and the uplink frequency unit is located in the guard band of the second frequency unit.

Refer to FIG. 14d. When the first frequency unit is located in a TDD operating band, and both a downlink signal transmitted on a downlink frequency unit and an uplink signal that is transmitted on an uplink frequency unit and that corresponds to the downlink signal occupy an uplink time domain resource, the downlink frequency unit is located in the guard band of the second frequency unit, and the uplink frequency unit is located in the guard band of the second frequency unit.

In this embodiment, for various scenarios in which there may be a problem of different directions of receiving and sending, the downlink frequency unit and the uplink frequency unit in the first frequency unit are separately deployed in the transmission bandwidth or the guard band of the second frequency unit, to avoid signal interference caused by the different directions of receiving and sending between the first frequency unit and the second frequency unit.

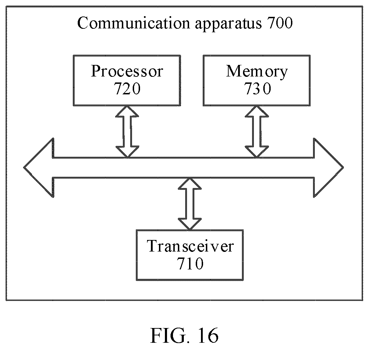

The foregoing describes the method provided in embodiments of this application in detail with reference to FIG. 8 to FIG. 14d. The following describes an apparatus provided in embodiments of this application in detail with reference to FIG. 15 and FIG. 16.

FIG. 15 is a block diagram of a communication apparatus according to an embodiment of this application. As shown in FIG. 15, the apparatus 600 may include a transceiver unit 610 and a processing unit 620.

Optionally, the communication apparatus 600 may correspond to the first device in the foregoing method embodiments, for example, may be the first device or a component (for example, a chip or a chip system) configured in the first device.

It should be understood that the communication apparatus 600 may correspond to the first device in methods shown in FIG. 8 and FIG. 11 according to embodiments of this application. The communication apparatus 600 may include units configured to perform the methods performed by the first device in the methods in FIG. 8 and FIG. 11. In addition, the units in the communication apparatus 600 and the foregoing other operations and/or functions are respectively used to implement corresponding procedures of the methods in FIG. 8 and FIG. 11.

The communication apparatus 600 may include the transceiver unit 610 and the processing unit 620. The transceiver unit 610 performs processing related to information receiving and sending, and the processing unit 620 performs processing in addition to the information receiving and sending.

For example, when the communication apparatus 600 is configured to perform the methods in FIG. 8 and FIG. 11, the processing unit 620 may be configured to determine a first frequency unit. The transceiver unit 610 may be configured to communicate with a second device on the first frequency unit. A granularity of a first channel raster corresponding to the first frequency unit is less than or equal to a granularity of a second channel raster corresponding to a second frequency unit. The second frequency unit is used for communication between the communication apparatus and a third device. The first frequency unit and the second frequency domain unit are located in a same operating band.

The communication apparatus 600 may alternatively correspond to the second device in the foregoing method embodiments, for example, may be the second device, or a component (for example, a chip or a chip system) configured in the second device.

The transceiver unit 610 in the communication apparatus 600 may be implemented via a transceiver, for example, may correspond to a transceiver 710 in a communication apparatus 700 shown in FIG. 16. The processing unit 620 in the communication apparatus 600 may be implemented via at least one processor, for example, may correspond to a processor 720 in the communication apparatus 700 shown in FIG. 16.

When the communication apparatus 600 is a chip or a chip system configured in a communication device (for example, a first device or a second device), the transceiver unit 610 in the communication apparatus 600 may be implemented through an input/output interface, a circuit, or the like, and the processing unit 620 in the communication apparatus 600 may be implemented via a processor, a microprocessor, an integrated circuit, or the like integrated in the chip or the chip system.

FIG. 16 is another block diagram of a communication apparatus according to an embodiment of this application. As shown in FIG. 16, the communication apparatus 700 may include a transceiver 710, a processor 720, and a memory 730. The transceiver 710, the processor 720, and the memory 730 communicate with each other through an internal connection path. The memory 730 is configured to store instructions, and the processor 720 is configured to execute the instructions stored in the memory 730, to control the transceiver 710 to send a signal and/or receive a signal.

It should be understood that the communication apparatus 700 may correspond to the first device or the second device in the foregoing method embodiments, and may be configured to perform steps and/or procedures performed by the first device or the second device in the foregoing method embodiments. Optionally, the memory 730 may include a read-only memory and a random access memory, and provide instructions and data for the processor. A part of the memory may further include a non-volatile random access memory. The memory 730 may be an independent device, or may be integrated into the processor 720. The processor 720 may be configured to execute the instructions stored in the memory 730, and when the processor 720 executes the instructions stored in the memory, the processor 720 is configured to perform the steps and/or procedures corresponding to the first device or the second device in the foregoing method embodiments.

Optionally, the communication apparatus 700 is the first device in the foregoing embodiments.

Optionally, the communication apparatus 700 is the second device in the foregoing embodiments.

The transceiver 710 may include a transmitter and a receiver. The transceiver 710 may further include an antenna, and there may be one or more antennas. The processor 720, the memory 730, and the transceiver 710 may be devices integrated on different chips. For example, the processor 720 and the memory 730 may be integrated into a baseband chip, and the transceiver 710 may be integrated into a radio frequency chip. The processor 720, the memory 730, and the transceiver 710 may alternatively be devices integrated on a same chip. This is not limited in this application.

Optionally, the communication apparatus 700 is a component configured in the first device, for example, a chip or a chip system.

Optionally, the communication apparatus 700 is a component configured in the second device, for example, a chip or a chip system.

The transceiver 720 may alternatively be a communication interface, such as an input/output interface or a circuit. The transceiver 720, the processor 710, and the memory 730 may be integrated into a same chip, for example, integrated into a baseband chip.

This application further provides a processing apparatus, including at least one processor. The at least one processor is configured to execute a computer program stored in a memory, to cause the processing apparatus to perform the method performed by the first device in the foregoing method embodiments or the method performed by the second device in the foregoing method embodiments.

Embodiments of this application further provide a processing apparatus, including a processor and an input/output interface. The input/output interface is coupled to the processor. The input/output interface is configured to input and/or output information. The information includes at least one of instructions and data. The processor is configured to execute a computer program, to cause the processing apparatus to perform the method performed by the first device in the foregoing method embodiments or the method performed by the second device in the foregoing method embodiments.

Embodiments of this application further provide a processing apparatus, including a processor and a memory. The memory is configured to store a computer program, and the processor is configured to invoke the computer program from the memory and run the computer program, to cause the processing apparatus to perform the method performed by the first device in the foregoing method embodiments or the method performed by the second device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA), another programmable logic device, a discrete gate, a transistor logic device, or a discrete hardware component. The methods, the steps, and logical block diagrams that are disclosed in embodiments of this application may be implemented or performed. The general-purpose processor may be a microprocessor, or the processor may be any conventional processor or the like.

It may be understood that the memory in embodiments of this application may be a volatile memory or a non-volatile memory, or may include both a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), and is used as an external cache. Through example but not limitative description, many forms of RAMs may be used, for example, a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DR RAM). It should be noted that the memory of the system and method described in this specification includes but is not limited to these and any memory of another proper type.

According to the method provided in embodiments of this application, this application further provides a computer program product. The computer program product includes computer program code. When the computer program code is run on a computer, the computer is caused to perform the method performed by the first device or the second device in the foregoing method embodiments.

According to the method provided in embodiments of this application, this application further provides a computer-readable storage medium. The computer-readable storage medium stores program code. When the program code is run on a computer, the computer is caused to perform the method performed by the first device or the second device in the foregoing method embodiments.

According to the method provided in embodiments of this application, this application further provides a communication system. The communication system may include the foregoing first device and second device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   determining, by a first device, a first frequency unit; and
   communicating, by the first device, with a second device on the first frequency unit, wherein
   a granularity of a first channel raster corresponding to the first frequency unit is less than or equal to a granularity of a second channel raster corresponding to a second frequency unit, the second frequency unit is used for communication between the first device and a third device, and the first frequency unit and the second frequency domain unit are located in a same operating band.

2. The method according to claim 1, wherein the method further comprises:
   sending, by the first device, first configuration information to the second device, wherein the first configuration information indicates at least one of the following:

   an uplink offset;
   a frequency domain spacing between a downlink frequency position and an uplink frequency position; and
   an uplink frequency unit.

3. The method according to claim 1 or 2, wherein a frequency position at which the first channel raster in the first frequency unit is located corresponds to a frequency position of a resource element in the first frequency unit, and an index of the resource element in frequency domain is determined based on a transmission bandwidth of the first frequency unit or a transmission bandwidth of the second frequency unit.

4. The method according to any one of claims 1 to 3, wherein a boundary of a resource block of the first frequency unit is aligned with a boundary of a resource block of the second frequency unit, or a boundary of a subcarrier of the first frequency unit is aligned with a boundary of a subcarrier of the second frequency unit.

5. The method according to any one of claims 1 to 4, wherein

   when the first frequency unit is comprised in the transmission bandwidth of the second frequency unit, the boundary of the resource block of the first frequency unit is aligned with the boundary of the resource block of the second frequency unit;
   when the first frequency unit is comprised in a guard band of the second frequency unit, the boundary of the subcarrier of the first frequency unit is aligned with the boundary of the subcarrier of the second frequency unit; or
   when the first frequency unit is not comprised in the second frequency unit, and a frequency domain spacing between the first frequency unit and the second frequency unit is less than a threshold, the boundary of the subcarrier of the first frequency unit is aligned with the boundary of the subcarrier of the second frequency unit.

**6.** The method according to any one of claims 1 to 5, wherein the granularity of the first channel raster is determined based on at least one of the following:

   a deployment mode of the first frequency unit; and
   a subcarrier spacing of the first frequency unit.

**7.** The method according to any one of claims 1 to 5, wherein in a same operating band, the granularity of the second channel raster is 100 kHz, and the granularity of the first channel raster is an integer multiple of 5 kHz, 10 kHz, or 20 kHz.

**8.** The method according to any one of claims 1 to 7, wherein a radio frequency reference frequency $F_{REF}$ corresponding to the first frequency unit satisfies: $F_{REF}=F_{REF-Offs}+\Delta F_{Global} (N_{REF}-N_{REF-Offs})+offset$, wherein $F_{REF-Offs}$ is a radio frequency reference frequency offset value, $\Delta F_{Global}$ is a granularity of a global channel raster, $N_{REF}$ is a new radio absolute radio frequency channel number NR-ARFCN, $N_{REF-Offs}$ is an NR-ARFCN offset value, offset is a frequency offset, and a value of offset is one of {-50, -45, -40, -35, -30, -25, -20, -15, -10, -5, 0, 5, 10, 15, 20, 25, 30, 35, 40, 45, 50} kHz.

**9.** The method according to any one of claims 1 to 8, wherein the first frequency unit comprises an uplink frequency unit used for transmitting an uplink signal, and/or a downlink frequency unit used for transmitting a downlink signal; the determining, by a first device, a first frequency unit comprises:

   determining, by the first device, the uplink frequency unit based on an uplink frequency position and an uplink offset; and/or
   determining, by the first device, the downlink frequency domain unit based on a downlink frequency position and a downlink offset; and
   before the determining, by a first device, a first frequency unit, the method comprises:
   determining, by the first device, the uplink offset and/or the downlink offset based on at least one of a type of a frequency band in which the downlink frequency unit is located, a first capability of the second device, a type of the second device, a type of a time domain resource on which a signal carried by the downlink frequency unit is located, and a type of a time domain resource on which a signal carried by the uplink frequency unit is located, wherein the first capability indicates whether a frequency shift of the uplink signal to an uplink transmission frequency band other than a downlink transmission frequency band in which the downlink frequency unit is located is supported.

**10.** The method according to claim 9, wherein

   the downlink frequency unit is located in the downlink transmission frequency band, and
   when the first capability indicates that the frequency shift of the uplink signal to the uplink transmission frequency band other than the downlink transmission frequency band is supported, the uplink offset is a first value or a second value; or when the first capability indicates that the frequency shift of the uplink signal to the uplink transmission frequency band other than the downlink transmission frequency band is not supported, the uplink offset is a first value; or
   the downlink frequency unit is located in the uplink transmission frequency band, and
   both the downlink offset and the uplink offset are a first value or a second value.

**11.** The method according to claim 10, wherein the downlink transmission frequency band and the uplink transmission frequency band are located in a same operating band.

**12.** The method according to claim 10 or 11, wherein

   when the uplink transmission frequency band is used for long term evolution LTE uplink communication, the uplink offset is the second value; or
   when the uplink transmission frequency band is not used for LTE uplink communication, the uplink offset is the first value.

**13.** The method according to claim 9, wherein

   the first frequency unit is located in a TDD operating band, and when the downlink signal occupies a downlink time domain resource, and the uplink signal occupies an uplink time domain resource, both the downlink offset and the uplink offset are a first value or a second value;

when both the downlink signal and the uplink signal occupy a downlink time domain resource, both the downlink offset and the uplink offset are a first value; or

when both the downlink signal and the uplink signal occupy an uplink time domain resource, both the downlink offset and the uplink offset are a first value or a second value.

14. The method according to claim 13, wherein

when the uplink time domain resource is used for LTE uplink communication, the downlink offset and the uplink offset are the second value; or

when the uplink time domain resource is not used for LTE uplink communication, the downlink offset and the uplink offset are the first value.

15. The method according to any one of claims 10 to 14, wherein the first value is 0, and the second value is 7.5 kHz.

16. The method according to any one of claims 1 to 15, wherein

when the second frequency unit is located in an uplink transmission frequency band, the uplink frequency unit in the first frequency unit is located in the transmission bandwidth of the second frequency unit, and the downlink frequency unit in the first frequency unit is located in the guard band of the second frequency unit;

when the second frequency unit is located in a downlink transmission frequency band, the downlink frequency unit is located in the transmission bandwidth of the second frequency unit, and the uplink frequency unit is located in the guard band of the second frequency unit;

when the first frequency unit is located in a TDD operating band, and both the downlink signal transmitted on the downlink frequency unit and the uplink signal that is transmitted on the uplink frequency unit and that corresponds to the downlink signal occupy the downlink time domain resource, the downlink frequency unit is located in the transmission bandwidth of the second frequency unit, and the uplink frequency unit is located in the guard band of the second frequency unit; or

when the first frequency unit is located in a TDD operating band, and both the downlink signal transmitted on the downlink frequency unit and the uplink signal that is transmitted on the uplink frequency unit and that corresponds to the downlink signal occupy the uplink time domain resource, the downlink frequency unit is located in the guard band of the second frequency unit, and the uplink frequency unit is located in the guard band of the second frequency unit.

17. A communication apparatus, comprising:

a processing unit, configured to determine a first frequency unit; and

a transceiver unit, configured to communicate with a second device on the first frequency unit, wherein a granularity of a first channel raster corresponding to the first frequency unit is less than or equal to a granularity of a second channel raster corresponding to a second frequency unit, the second frequency unit is used for communication between the communication apparatus and a third device, and the first frequency unit and the second frequency domain unit are located in a same operating band.

18. The apparatus according to claim 17, wherein the transceiver unit is further configured to:
send first configuration information to the second device, wherein the first configuration information indicates at least one of the following:

an uplink offset;

a frequency domain spacing between a downlink frequency position and an uplink frequency position; and

an uplink frequency unit.

19. The apparatus according to claim 17 or 18, wherein a frequency position at which the first channel raster in the first frequency unit is located corresponds to a frequency position of a resource element in the first frequency unit, and an index of the resource element in frequency domain is determined based on a transmission bandwidth of the first frequency unit or a transmission bandwidth of the second frequency unit.

20. The apparatus according to any one of claims 17 to 19, wherein a boundary of a resource block of the first frequency unit is aligned with a boundary of a resource block of the second frequency unit, or a boundary of a subcarrier of the first frequency unit is aligned with a boundary of a subcarrier of the second frequency unit.

21. The apparatus according to any one of claims 17 to 20, wherein

when the first frequency unit is comprised in the transmission bandwidth of the second frequency unit, the boundary of the resource block of the first frequency unit is aligned with the boundary of the resource block of the second frequency unit;
when the first frequency unit is comprised in a guard band of the second frequency unit, the boundary of the subcarrier of the first frequency unit is aligned with the boundary of the subcarrier of the second frequency unit; or
when the first frequency unit is not comprised in the second frequency unit, and a frequency domain spacing between the first frequency unit and the second frequency unit is less than a threshold, the boundary of the subcarrier of the first frequency unit is aligned with the boundary of the subcarrier of the second frequency unit.

22. The apparatus according to any one of claims 17 to 21, wherein the granularity of the first channel raster is determined based on at least one of the following:

a deployment mode of the first frequency unit; and
a subcarrier spacing of the first frequency unit.

23. The apparatus according to any one of claims 17 to 21, wherein in a same operating band, the granularity of the second channel raster is 100 kHz, and the granularity of the first channel raster is an integer multiple of 5 kHz, 10 kHz, or 20 kHz.

24. The apparatus according to any one of claims 17 to 23, wherein a radio frequency reference frequency $F_{REF}$ corresponding to the first frequency unit satisfies: $F_{REF}=F_{REF-Offs}+\Delta F_{Global}(N_{REF}-N_{REF-Offs})+offset$, wherein $F_{REF-Offs}$ is a radio frequency reference frequency offset value, $\Delta F_{Global}$ is a granularity of a global channel raster, $N_{REF}$ is a new radio absolute radio frequency channel number NR-ARFCN, $N_{REF-Offs}$ is an NR-ARFCN offset value, offset is a frequency offset, and a value of offset is one of {-50, -45, -40, -35, -30, -25, -20, -15, -10, -5, 0, 5, 10, 15, 20, 25, 30, 35, 40, 45, 50} kHz.

25. The apparatus according to any one of claims 17 to 24, wherein the first frequency unit comprises an uplink frequency unit used for transmitting an uplink signal, and/or a downlink frequency unit used for transmitting a downlink signal; that a first device determines the first frequency unit comprises:

determining, by the first device, the uplink frequency unit based on an uplink frequency position and an uplink offset; and/or
determining, by the first device, the downlink frequency domain unit based on a downlink frequency position and a downlink offset; and
before the first device determines the first frequency unit, comprising:
determining, by the first device, the uplink offset and/or the downlink offset based on at least one of a type of a frequency band in which the downlink frequency unit is located, a first capability of the second device, a type of the second device, a type of a time domain resource on which a signal carried by the downlink frequency unit is located, and a type of a time domain resource on which a signal carried by the uplink frequency unit is located, wherein the first capability indicates whether a frequency shift of the uplink signal to an uplink transmission frequency band other than a downlink transmission frequency band in which the downlink frequency unit is located is supported.

26. The apparatus according to claim 25, wherein

the downlink frequency unit is located in the downlink transmission frequency band, and
when the first capability indicates that the frequency shift of the uplink signal to the uplink transmission frequency band other than the downlink transmission frequency band is supported, the uplink offset is a first value or a second value; or when the first capability indicates that the frequency shift of the uplink signal to the uplink transmission frequency band other than the downlink transmission frequency band is not supported, the uplink offset is a first value; or
the downlink frequency unit is located in the uplink transmission frequency band, and
both the downlink offset and the uplink offset are a first value or a second value.

**27.** The apparatus according to claim 26, wherein the downlink transmission frequency band and the uplink transmission frequency band are located in a same operating band.

**28.** The apparatus according to claim 26 or 27, wherein

when the uplink transmission frequency band is used for long term evolution LTE uplink communication, the uplink offset is the second value; or
when the uplink transmission frequency band is not used for LTE uplink communication, the uplink offset is the first value.

**29.** The apparatus according to claim 25, wherein

the first frequency unit is located in a TDD operating band, and when the downlink signal occupies a downlink time domain resource, and the uplink signal occupies an uplink time domain resource, both the downlink offset and the uplink offset are a first value or a second value;
when both the downlink signal and the uplink signal occupy a downlink time domain resource, both the downlink offset and the uplink offset are a first value; or
when both the downlink signal and the uplink signal occupy an uplink time domain resource, both the downlink offset and the uplink offset are a first value or a second value.

**30.** The apparatus according to claim 29, wherein

when the uplink time domain resource is used for LTE uplink communication, the downlink offset and the uplink offset are the second value; or
when the uplink time domain resource is not used for LTE uplink communication, the downlink offset and the uplink offset are the first value.

**31.** The apparatus according to any one of claims 26 to 30, wherein the first value is 0, and the second value is 7.5 kHz.

**32.** The apparatus according to any one of claims 17 to 31, wherein

when the second frequency unit is located in an uplink transmission frequency band, the uplink frequency unit in the first frequency unit is located in the transmission bandwidth of the second frequency unit, and the downlink frequency unit in the first frequency unit is located in the guard band of the second frequency unit;
when the second frequency unit is located in a downlink transmission frequency band, the downlink frequency unit is located in the transmission bandwidth of the second frequency unit, and the uplink frequency unit is located in the guard band of the second frequency unit;
when the first frequency unit is located in a TDD operating band, and both the downlink signal transmitted on the downlink frequency unit and the uplink signal that is transmitted on the uplink frequency unit and that corresponds to the downlink signal occupy the downlink time domain resource, the downlink frequency unit is located in the transmission bandwidth of the second frequency unit, and the uplink frequency unit is located in the guard band of the second frequency unit; or
when the first frequency unit is located in a TDD operating band, and both the downlink signal transmitted on the downlink frequency unit and the uplink signal that is transmitted on the uplink frequency unit and that corresponds to the downlink signal occupy the uplink time domain resource, the downlink frequency unit is located in the guard band of the second frequency unit, and the uplink frequency unit is located in the guard band of the second frequency unit.

**33.** A communication device, comprising a processor and a memory, wherein the memory is configured to store a computer program, and the processor is configured to invoke and run the computer program stored in the memory, to perform the method according to any one of claims 1 to 16.

**34.** A chip, comprising: a processor, configured to invoke computer instructions from a memory and run the computer instructions, to cause a device in which the chip is installed to perform the method according to any one of claims 1 to 16.

**35.** A computer-readable storage medium, configured to store computer program instructions, wherein the computer program causes a computer to perform the method according to any one of claims 1 to 16.

**36.** A computer program product, comprising computer program instructions, wherein the computer program instructions cause a computer to perform the method according to any one of claims 1 to 16.

Communication system 100

FIG. 1

FIG. 2a

Receiver

Fronthaul link
(downlink signaling)

Fronthaul link
(uplink signaling)

Reverse
link

Helper

Forward link

Tag

FIG. 2b

Central control
unit

Fronthaul link
(downlink signaling)

Fronthaul link
(uplink signaling)

Reverse
link

Reader

Forward link

Tag

FIG. 2c

Receive end device 310

Primary receiver 311
(turned off)

Wake-up receiver 312
(turned on)

320

FIG. 3a

FIG. 3b

FIG. 4

FIG. 5

Frequency

CRB #2

CRB #1

CRB #0

Point A

| k=11 |
| k=10 |
| k=9 |
| k=8 |
| k=7 |
| k=6 |
| k=5 |
| k=4 |
| k=3 |
| k=2 |
| k=1 |
| k=0 |

} 12 subcarriers

**FIG. 6**

Carrier

| CRB #16 |
| CRB #15 |
| CRB #14 |

$N_{\mathrm{BWP},i}^{\mathrm{size},\mu}$

| PRB #8 |
| PRB #7 |
| PRB #6 |
| PRB #5 |
| PRB #4 |
| PRB #3 |
| PRB #2 |
| PRB #1 |

BWP

| CRB #13 |
| CRB #12 |
| CRB #11 |
| CRB #10 |
| CRB #9 |
| CRB #8 |
| CRB #7 |
| CRB #6 |

$N_{\mathrm{BWP},i}^{\mathrm{start},\mu}$

| CRB #5 |
| CRB #4 |
| CRB #3 |
| CRB #2 |
| CRB #1 |

Frequency

Point A

**FIG. 7**

400

```
┌──────────────────┐                          ┌──────────────────┐
│   First device   │                          │  Second device   │
└──────────────────┘                          └──────────────────┘
┌──────────────────┐
│     S410-1:      │
│ Determine a first│                          ┌──────────────────┐
│  frequency unit  │                          │S410-2: Determine │
└──────────────────┘                          │the first frequency│
                                              │       unit       │
                                              └──────────────────┘
```

S420-1: Send a downlink signal
on the first frequency unit

S420-2: Send an uplink signal on
the first frequency unit

## FIG. 8

⬚ First frequency unit

⬚ Transmission frequency band
   of a second frequency unit

⬚ Guard band of the second
   frequency unit

↑ Frequency position corresponding to
   a first channel raster

↑ Frequency position corresponding to
   a second channel raster

RB #0  RB #1 /RB' #0  RB $\#\left\lfloor\dfrac{N_{RB}}{2}\right\rfloor$  RB $\#\left\lfloor\dfrac{N_{RB}}{2}\right\rfloor+1$  RB $\#\,N_{RB}-1$

## FIG. 9a

First frequency unit

Transmission frequency band of a second frequency unit

Guard band of the second frequency unit

Frequency position corresponding to a first channel raster

Frequency position corresponding to a second channel raster

| RB #0 | RB #1 | | | RB $\#\left\lfloor\frac{N_{RB}}{2}\right\rfloor$ | RB $\#\left\lfloor\frac{N_{RB}}{2}\right\rfloor+1$ | | | RB $\# N_{RB}\text{-}1$ | |

FIG. 9b

First frequency unit

Transmission frequency band of a second frequency unit

Guard band of the second frequency unit

Frequency position corresponding to a first channel raster

Frequency position corresponding to a second channel raster

Spacing less than a threshold

| RB #0 | RB #1 | | | RB $\#\left\lfloor\frac{N_{RB}}{2}\right\rfloor$ | RB $\#\left\lfloor\frac{N_{RB}}{2}\right\rfloor+1$ | | | RB $\# N_{RB}\text{-}1$ | |

FIG. 9c

First frequency unit

Transmission frequency band of a second frequency unit

Guard band of the second frequency unit

Frequency position corresponding to a first channel raster

Frequency position corresponding to a second channel raster

k*100 kHz

RB #0    RB #N-1    RB #N    RB #N+1    RB #2N+1

(a)

k*100 kHz

RB #0    RB #N-1    RB #N    RB #N+1    RB #2N

(b)

n*100 kHz

RB #0    RB #M-1    RB #M    RB #M+1    RB #2M+1

(c)

n*100 kHz

RB #0    RB #M-1    RB #M    RB #M+1    RB #2M

(d)

FIG. 10

500

```
┌──────────────┐                                    ┌───────────────┐
│ First device │                                    │ Second device │
└──────┬───────┘                                    └───────┬───────┘
```

| S510: Determine an uplink offset and/or a downlink offset based on at least one of a type of a frequency band in which a downlink frequency unit is located, a first capability of the second device, a type of the second device, a type of a time domain resource on which a signal carried by the downlink frequency unit is located, and a type of a time domain resource on which a signal carried by an uplink frequency unit is located |
|---|

| S520-1: Determine the uplink frequency unit based on an uplink frequency position and the uplink offset | | S520-2: Determine the uplink frequency unit based on the uplink frequency position and the uplink offset |
|---|---|---|
| S530-1: Determine the downlink frequency unit based on a downlink frequency position and the downlink offset | | S530-2: Determine the downlink frequency unit based on the downlink frequency position and the downlink offset |

S540-1: Send a downlink signal
on the downlink frequency unit

S540-2: Send an uplink signal on
the uplink frequency unit

FIG. 11

▨ LTE

☰ NR

▨ Passive IoT

Downlink transmission
frequency band

Uplink transmission
frequency band

FIG. 12a

▓ LTE
☰ NR
▨ Passive IoT

Downlink transmission
frequency band

FIG. 12b

▓ LTE
☰ NR
▨ Passive IoT

Uplink transmission
frequency band

FIG. 12c

▓ LTE
☰ NR
▨ Passive IoT

TDD operating band-
downlink slot

TDD operating band-
uplink slot

FIG. 13a

▓ LTE
☰ NR
▨ Passive IoT

TDD operating
band-downlink slot

FIG. 13b

LTE

NR

Passive IoT

TDD operating
band-uplink slot

FIG. 13c

Guard band

Uplink transmission frequency band

Downlink frequency unit

Uplink frequency unit

FIG. 14a

Guard band

Downlink transmission frequency band

Downlink frequency unit

Uplink frequency unit

FIG. 14b

▦ Guard band

▨ TDD transmission frequency band

▢ Downlink frequency unit

▣ Uplink frequency unit

FIG. 14c

▦ Guard band

▨ TDD transmission frequency band

▢ Downlink frequency unit

▣ Uplink frequency unit

FIG. 14d

Communication apparatus 600

Transceiver unit 610

Processing unit 620

FIG. 15

FIG. 16

# EP 4 451 774 A1

## INTERNATIONAL SEARCH REPORT

| International application No. |
|---|
| **PCT/CN2023/073651** |

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

3GPP, CNTXT, ENTXTC, WPABS, WPABSC, CJFD: 多个, 信道栅格, 粒度, 频率, 频率单元, 载波, multiple, channel raster, granularity, frequency, larger, , second, two

### C. DOCUMENTS CONSIDERED TO BE RELEVANT

| Category* | Citation of document, with indication, where appropriate, of the relevant passages | Relevant to claim No. |
|---|---|---|
| X | US 2019253959 A1 (FUJITSU LTD.) 15 August 2019 (2019-08-15)<br>description, paragraphs [0028]-[0176] | 1-36 |
| X | CN 110741588 A (NOKIA TECHNOLOGIES OY) 31 January 2020 (2020-01-31)<br>description, paragraphs [0005]-[0132] | 1-36 |
| A | CN 113785526 A (APPLE INC.) 10 December 2021 (2021-12-10)<br>entire document | 1-36 |
| A | ZTE Corperation. ""R4-1915435 CR for TS 38.104 on removal of SCS based channel raster for n90 (Section 5.4.2.3)""<br>*3GPP tsg_ran\wg4_radio*, 25 November 2019 (2019-11-25),<br>entire document | 1-36 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 April 2023** | **21 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2023/073651**

| Patent document cited in search report | | | Publication date (day/month/year) | Patent family member(s) | | | Publication date (day/month/year) |
|---|---|---|---|---|---|---|---|
| US | 2019253959 | A1 | 15 August 2019 | JP | 2020500464 | A | 09 January 2020 |
| | | | | JP | 6863459 | B2 | 21 April 2021 |
| | | | | GB | 2555790 | A | 16 May 2018 |
| | | | | WO | 2018087513 | A1 | 17 May 2018 |
| CN | 110741588 | A | 31 January 2020 | EP | 3602900 | A1 | 05 February 2020 |
| | | | | WO | 2018171902 | A1 | 27 September 2018 |
| | | | | WO | 2018171902 | A9 | 12 December 2019 |
| | | | | US | 2020028637 | A1 | 23 January 2020 |
| CN | 113785526 | A | 10 December 2021 | WO | 2020232164 | A2 | 19 November 2020 |
| | | | | WO | 2020232164 | A3 | 24 December 2020 |
| | | | | JP | 2022531694 | A | 08 July 2022 |
| | | | | US | 2022191810 | A1 | 16 June 2022 |

Form PCT/ISA/210 (patent family annex) (July 2022)

**EP 4 451 774 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210114704